# EUROPÄISCHE PATENTSCHRIFT

(11) **EP 1 354 659 B1**
(45) Veröffentlichungstag und Bekanntmachung des Hinweises auf die Patenterteilung: **21.08.2013**
(21) Anmeldenummer: 03010540.7
(22) Anmeldetag: 24.09.1998
(51) Int. Cl.: B23K 9/06

(54) **Verfahren zum Zünden eines Lichtbogens zwischen einem Werkstück und einer abschmelzenden Elektrode**
Arc starting method between a workpiece and a consumable electrode
Methode d'amorçage d'un arc entre une pièce et une électrode fusible

(30) Priorität: 29.09.1997 AT 164897; 10.03.1998 AT 41098
(43) Veröffentlichungstag der Anmeldung: 22.10.2003
(62) Teilanmeldung aus: 98118066.4
(73) Patentinhaber: Fronius International GmbH, 4643 Pettenbach (AT)
(72) Erfinder: Artelsmair, Josef, 4552 Wartberg/Krems (AT)
(74) Vertreter: Ofner, Clemens

(56) Entgegenhaltungen:
- EP-A- 0 324 960
- EP-A- 0 547 417
- DE-A- 4 032 618

## Beschreibung

Die Erfindung betrifft ein Verfahren zum Zünden eines Lichtbogens zwischen einem Werkstück und einer abschmelzenden Elektrode, wie dieses im Oberbegriff des Anspruches 1 beschrieben ist.

Aus der DE 40 32 618 A1 ist ein Verfahren zum Zünden eines Lichtbogens nach dem Lift-Arc Prinzip bekannt, bei dem zum Zünden des Lichtbogens zwei Energiequellen parallel geschaltet sind. Dabei wird der Schweißdraht von einem Drahtvorschubgerät bis zum Berühren an das Werkstück zubewegt, wodurch ein Kurzschluss geschaffen wird. Anschließend wird der Schweißdraht durch die zusätzliche Energiequelle mit einer geringen Stromstärke vom Werkstück abgehoben bzw. zurückgezogen, sodass aufgrund der Aufhebung des Kurzschlusses eine Zündung des Lichtbogens erfolgt. Die Höhe des Stromes ist dabei so definiert, dass ein Abschmelzen des Materials vom Schweißdraht verhindert wird. Nach Ablauf einer voreinstellbaren Zeitdauer bzw. nach dem Zünden des Lichtbogens wird der Schweißdraht wiederum in Richtung des Werkstückes bewegt, wobei nunmehr die Versorgung des Lichtbogens mit einem hohen Strom über die primäre Energiequelle erfolgt, sodass ein Abschmelzen des Schweißdrahtes gewährleistet ist.

Nachteilig ist hierbei, dass aufgrund der Zündung des Lichtbogens über eine Hilfsstromquelle mit geringem Strom beim Abheben des Schweißdrahtes nur eine geringe Lichtbogenlänge erzielt werden kann, wodurch es durch Aufschmelzen des Schweißdrahtes zu einem weiteren Kurzschluss kommen kann, da das aufgeschmolzene Material beim Übergang vom Schweißdraht zum Werkstück in das Schmelzbad gesaugt wird, und somit aufgrund der geringen Lichtbogenlänge es zu einem weiteren Kurzschluss führen kann, nachdem der Lichtbogen bereits gezündet wurde.

Weiters ist aus der DE 37 31 180 C2 ein Verfahren zum Zünden eines Lichtbogens bekannt, bei dem die Versorgung des Lichtbogens bzw. die Zündung des Lichtbogens über eine geregelte Energiequelle erfolgt. Hierzu wird der Schweißdraht in Richtung des Werkstückes bewegt, sodass ein Kurzschluss zwischen dem Schweißdraht und dem Werkstück entsteht, wobei gleichzeitig der Schweißdraht von der Energiequelle mit einem geringen Strom versorgt wird, sodass bei der Bildung des Kurzschlusses der Lichtbogen durch Abschmelzen des Schweißdrahtes mit einer geringen Lichtbogenlänge gezündet wird. Diese Energie bzw. die Höhe des Stromes zum Zünden des Lichtbogens ist derartig ausgelegt, dass ein Aufschmelzen bzw. Abschmelzen des Schweißdrahtes erfolgt. Anschließend wird mit wachsender Lichtbogenlänge der Energiebedarf bzw. der Strom am Schweißdraht erhöht, sodass nach Erreichen einer einstellbaren Schwelle ein definierter Energieimpuls bzw. Stromimpuls ausgesendet wird, und somit ein Ablösen des Tropfens am Schweißdrahtende erzielt wird. Bei einem derartigen Verfahren kann es zur Bildung satten Kurzschlusses kommen, d.h., dass bei Erlöschen des Lichtbogens das aufgeschmolzene Material am dem Werkstück kleben bleibt, sodass dieser satte Kurzschluss nurmehr mit einem extrem hohen Stromimpuls über eine gewisse Zeitdauer behoben werden kann, wodurch Schweißspritzer und Einbrände neben der Schweißstelle entstehen.

Des Weiteren beschreibt die EP 0 324 960 A1 einen Stromimpuls während eines Schweißprozesses im Kurzschluss, wodurch der Tropfen abgelöst wird. Bei einem Zündverfahren, wie es in der Anmeldung vorgesehen ist, soll jedoch der Schweißdraht lediglich erwärmt und nicht aufgeschmolzen werden. Des Weiteren erfolgt das Zündverfahren vor einem Schweißprozess.

Schließlich beschreibt die EP 0 547 417 A1 ein Verfahren zum Wiederzünden eines Lichtbogens mit einer nicht abschmelzenden Elektrode bei einem WIG-Schweißverfahren, wozu ein Hochspannungsimpuls erforderlich ist. Das erfindungsgemäße Zündverfahren der Anmeldung erwärmt jedoch eine abschmelzende Elektrode. Durch derart unterschiedliche Anforderungen zum Zünden des Lichtbogens mit nicht abschmelzenden Elektroden bzw. mit abschmelzenden Elektroden wird dem Fachmann die Erfindung keinesfalls nahe gelegt.

Der vorliegenden Erfindung liegt die Aufgabe zugrunde, ein Verfahren zum Zünden eines Lichtbogens zwischen einem Werkstück und einer abschmelzenden Elektrode, insbesondere einem Schweißdraht zu schaffen, bei der eine sichere und stabile Zündung des Lichtbogens erreicht wird.

Diese Aufgabe der Erfindung wird durch die Vorgehensweise nach dem Verfahren zum Zünden eines Lichtbogens zwischen einem Werkstück und einer abschmelzenden Elektrode, insbesondere einem Schweißdraht, wie dieses im kennzeichnenden Teil des Anspruches 1 beschrieben ist, gelöst.

Vorteilhaft ist hierbei, dass durch die stufenweise Anhebung des Stromes eine Vorwärmphase für den Schweißdraht geschaffen wird, sodass durch Aufhebung des Kurzschlusses, also nach-dem nach Abheben des Schweißdrahtes vom Werkstück, eine sichere Zündung erreicht wird. Ein weiterer Vorteil liegt darin, dass nach dem Zünden des Lichtbogens der Strom auf einen voreinstellbaren Wert erhöht wird, wodurch ein kontrolliertes Abschmelzen des Schweißdrahtes erreicht wird und dass so erst bei Erreichen einer bestimmten Lichtbogenlänge, die über die Lichtbogenspannung erfasst wird, der tatsächliche Schweißprozess freigegeben wird, wodurch ein Abreißen bzw. Erlöschen des Lichtbogens bei zu frühem Start des tatsächlichen Schweißprozesses verhindert werden kann.

Weitere vorteilhafte Maßnahmen sind in den Ansprüchen 2 bis 6 beschrieben. Die damit erzielbaren Vorteile sind der detaillierten Figurenbeschreibung zu entnehmen.

Die Erfindung wird im nachfolgenden anhand der in den Zeichnungen dargestellten Ausführungsbeispiele näher erläutert.

Es zeigen:
- Fig. 1: eine schematische Darstellung eines Schweißgerätes mit den einzelnen Komponenten in vereinfachter, schematischer Darstellung;
- Fig. 2: ein Blockschaltbild der Schweißstromquelle mit parallel geschalteter Spannungsquelle in vereinfachter und schematischer Darstellung;
- Fig. 3: einen Vorschubgeschwindigkeitsverlauf für ein Drahtvorschubgerät in vereinfachter und schematischer Darstellung für das Ausführungsbeispiel nach Fig. 2;
- Fig. 4: einen Spannungsverlauf am Schweißdraht in vereinfachter, schematischer Darstellung für das Ausführungsbeispiel nach Fig. 2;
- Fig. 5: einen Stromverlauf am Schweißdraht in vereinfachter, schematischer Darstellung für das Ausführungsbeispiel nach Fig. 2;
- Fig. 6: ein Blockschaltbild für die Schweißstromquelle in vereinfachter, schematischer Darstellung;
- Fig. 7: einen Vorschubgeschwindigkeits- und Richtungsverlauf für das Drahtvorschubgerät nach Fig. 6, in vereinfachter, schematischer Darstellung;
- Fig. 8: einen Spannungsverlauf am Schweißdraht für das Ausführungsbeispiel nach Fig. 6, in vereinfachter, schematischer Darstellung;
- Fig. 9: einen Stromverlauf am Schweißdraht für das Ausführungsbeispiel nach Fig. 6, in vereinfachter, schematischer Darstellung;
- Fig. 10: ein Blockschaltbild eines weiteren Ausführungsbeispiels der Schweißstromquelle gemäß Fig. 2 zur Erzielung des erfindungsgemäßen Verfahrensablaufes gemäß den Fig. 3 bis 5;
- Fig. 11: ein Blockschaltbild der Schweißstromquelle mit der Konstant-Stromquelle und der erfindungsgemäß parallel geschalteten Konstant-Spannungsquelle in vereinfachter und schematischer Darstellung;
- Fig. 12: einen Vorschubgeschwindigkeitsverlauf für ein Drahtvorschubgerät in vereinfachter und schematischer Darstellung für das Ausführungsbeispiel nach Fig. 11;
- Fig. 13: einen Spannungsverlauf am Schweißdraht in vereinfachter, schematischer Darstellung für das Ausführungsbeispiel nach Fig. 11;
- Fig. 14: einen Stromverlauf am Schweißdraht in vereinfachter, schematischer Darstellung für das Ausführungsbeispiel nach Fig. 11;
- Fig. 15: ein Blockschaltbild eines weiteren Ausführungsbeispiels der Schweißstromquelle gemäß Fig. 11 zur Erzielung des erfindungsgemäßen Verfahrensablaufes gemäß den Fig. 12 bis 14.

Einführend sei festgehalten, dass in den unterschiedlich beschriebenen Ausführungsformen gleiche Teile bzw. Zustände mit gleichen Bezugszeichen bzw. gleichen Bauteilbezeichnungen versehen werden, wobei die in der gesamten Beschreibung enthaltenen Offenbarungen sinngemäß auf gleiche Teile bzw. Zustände mit gleichen Bezugszeichen bzw. gleichen Bauteilbezeichnungen übertragen werden können. Weiters können auch Einzelmerkmale aus den gezeigten unterschiedlichen Ausführungsbeispielen für sich eigenständige, erfindungsgemäße Lösungen darstellen.

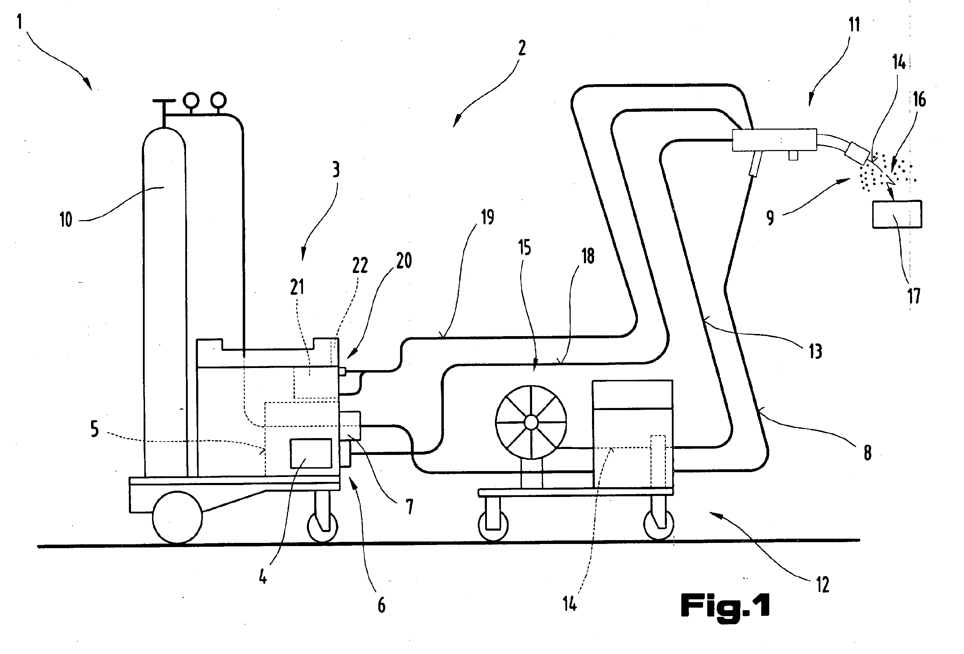

In Fig. 1 is ein Schweißgerät 1, insbesondere eine Schweißstromquelle 2, für verschiedenste Schweißverfahren, wie z.B. zum MIG-/MAG-Schweißen bzw. TIG-Schweißen gezeigt. Das Schweißgerät 1, insbesondere die Schweißstromquelle 2, umfasst eine Konstant-Stromquelle 3 mit einem Leistungsteil 4, eine Steuervorrichtung 5 und ein dem Leistungsteil 4 bzw. der Steuervorrichtung 5 zugeordnetes Umschaltglied 6. Das Umschaltglied 6 bzw. die Steuervorrichtung 5 ist mit einem Steuerventil 7 verbunden, welches in einer Versorgungsleitung 8 für ein Gas 9, insbesondere ein Schutzgas, wie beispielsweise Stickstoff, Helium oder Argon und dergleichen, zwischen einem Gasspeicher 10 und einem Schweißbrenner 11 angeordnet ist.

Zudem wird über die Steuervorrichtung 5 auch noch ein Drahtvorschubgerät 12 angesteuert, wobei über eine Versorgungsleitung 13 ein Schweißdraht 14 von einer Vorratstrommel 15 in den Bereich des Schweißbrenners 11 zugeführt wird. Die Energie zum Aufbau eines Lichtbogens 16 zwischen dem Schweißdraht 14 und einem Werkstück 17 wird über eine Versorgungsleitung 18 vom Leistungsteil 4 der Konstant-Stromquelle 3 dem Schweißbrenner 11 bzw. dem Schweißdraht 14 zugeführt.

Zum Kühlen des Schweißbrenners 11 wird über einen Kühlkreislauf 19 der Schweißbrenner 11 unter Zwischenschaltung eines Strömungswächters 20 mit einem Wasserbehälter 21 verbunden, sodass bei der Inbetriebnahme des Schweißbrenners 11 der Kühlkreislauf 19 von der Steuervorrichtung 5 gestartet werden kann, wodurch eine Kühlung des Schweißbrenners 11 erreicht wird.

Weiters weist das Schweißgerät 1 eine Ein- und/oder Ausgabevorrichtung 22, wie z.B. Bedienelemente, eine Tastatur und/oder ein Display auf, durch die die unterschiedlichsten Schweißparameter bzw. Betriebsarten des Schweißgerätes 1 eingestellt werden können. Dabei werden die über die Ein- und/oder Ausgabevorrichtung 22 eingestellten bzw. ausgewählten Werte an die Steuervorrichtung 5 weitergeleitet, sodass anschließend von der Steuervorrichtung 5 die einzelnen Komponenten entsprechend den vorgegebenen Werten bzw. den aus diesen Werten ermittelten Steuerfunktionen aktiviert werden können.

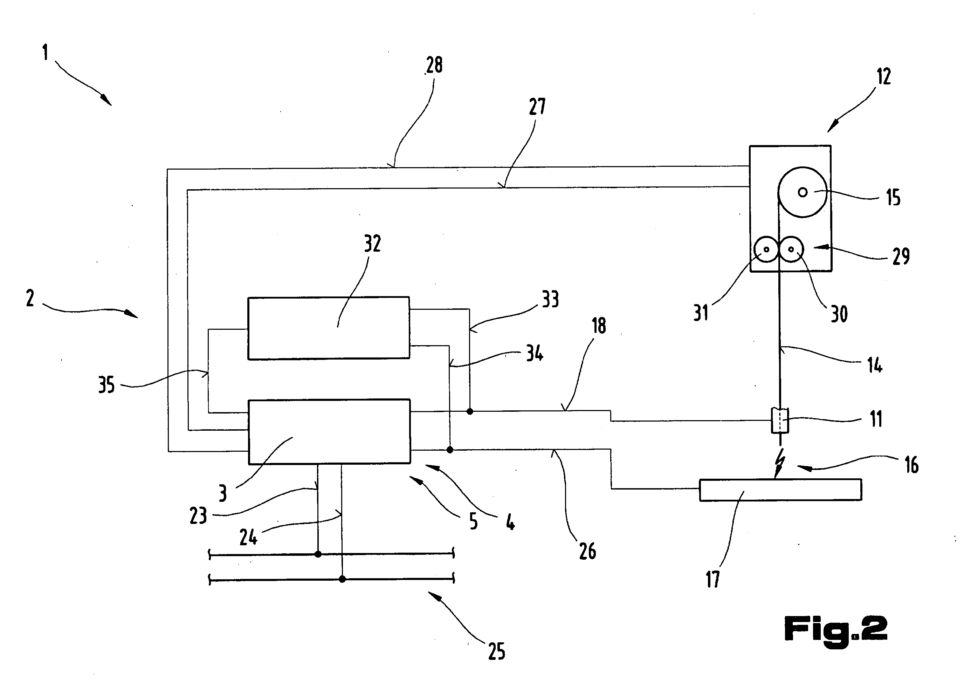

In den Fig. 2 bis 5 ist ein Verfahrensablauf zum Zünden des Lichtbogens 16 zwischen dem Werkstück 17 und einer abschmelzenden Elektrode, insbesondere dem Schweißdraht 14, gezeigt, wobei in Fig. 2 ein vereinfachtes Blockschaltbild der Schweißstromquelle 2, insbesondere des Schweißgerätes 1, dargestellt ist. Bei diesem Blockschaltbild sind in der Konstant-Stromquelle 3 die Komponenten des Leistungsteil 4 und der Steuervorrichtung 5, wie sie in Fig. 1 beschrieben sind, integriert.

Bei dem dargestellten Blockschaltbild sind die weiteren in Fig. 1 beschriebenen Komponenten mit der Konstant-Stromquelle 3 leitungsverbunden, sodass eine Aktivierung, beispielsweise des Kühlkreislaufes 19, durch die Konstant-Stromquelle 3, insbesondere der Steuervorrichtung 5, möglich ist. In Fig. 2 sind nur die für das Zünden des Lichtbogens 16 notwendigen Komponenten dargestellt. Dazu ist die Konstant-Stromquelle 3 über Versorgungsleitungen 23, 24 mit einem Spannungsversorgungsnetz 25 verbunden, sodass die einzelnen Komponenten des Schweißgerätes 1 mit Strom und Spannung versorgt werden können.

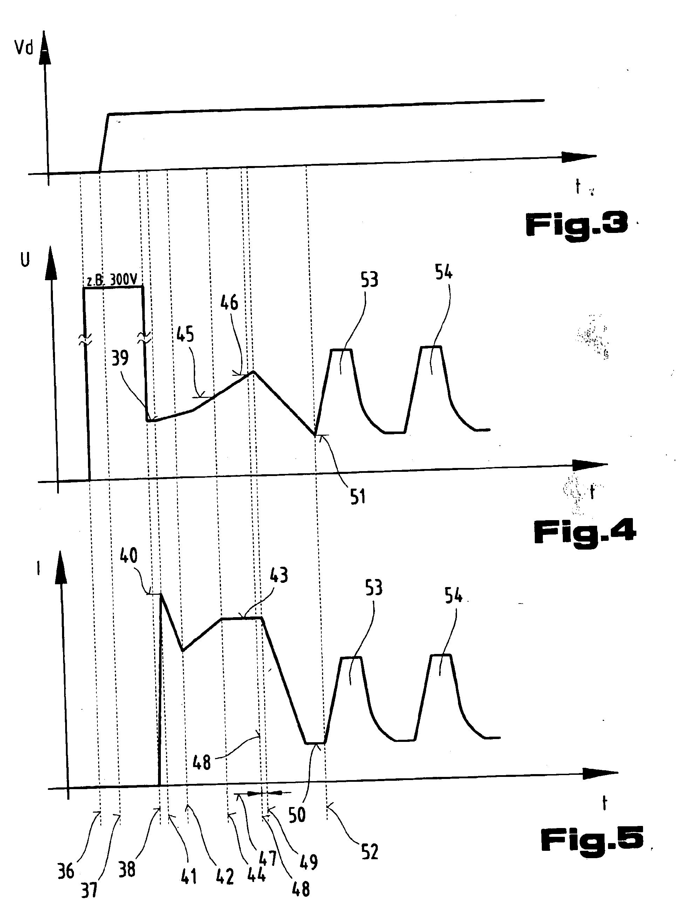

In den Fig. 3 bis 5 sind in Form von Diagrammen Verfahrensabläufe dargestellt, wobei in den Fig. 4 und 5 auf der Ordinate die Spannung U bzw. der Strom I sowie auf der Abszisse die Zeit t aufgetragen sind.

Bei dem dargestellten Blockschaltbild in Fig. 2 ist die Konstant-Stromquelle 3 über die Versorgungsleitung 18 mit dem schematisch dargestellten Schweißbrenner 11 verbunden, wogegen das Werkstück 17 über eine weitere Versorgungsleitung 26 mit der Konstant-Stromquelle 3 verbunden ist. Bei dem dargestellten Ausführungsbeispiel wird der Schweißbrenner 11 über die Versorgungsleitung 18 mit dem positiven Potential versorgt, wogegen das negative Potential über die Versorgungsleitung 26 am Werkstück 17 angelegt ist. Gleichzeitig weist die Konstant-Stromquelle 3 Steuerleitungen 27, 28 auf, die mit dem Drahtvorschubgerät 12 verbunden sind. Bei dem Drahtvorschubgerät 12 sind die Vorratstrommel 15 sowie eine Fördervorrichtung 29 zum Befördern des Schweißdrahtes 14 an den Schweißbrenner 11 dargestellt. Die Fördervorrichtung 29 kann aus zwei Förderrollen 30, 31 gebildet werden, wobei zumindest eine der beiden Förderrollen 30, 31 über einen nicht dargestellten Motor angetrieben wird.

Weiters ist in Fig. 2 eine zusätzliche Konstant-Spannungsquelle 32 parallel zur Konstant-Stromquelle 3 geschaltet, d.h., dass die Ausgänge der Konstant-Spannungsquelle 32 über Leitungen 33, 34 mit den Versorgungsleitungen 18, 26 bzw. den Ausgängen der Konstant-Stromquelle 3 verbunden sind. Dabei ist das positive Potential der Konstant-Spannungsquelle 32 wiederum mit dem positiven Potential der Konstant-Stromquelle 3 zusammengeschaltet. Damit die Konstant-Spannungsquelle 32 von der Steuervorrichtung 5 angesteuert werden kann, ist eine Steuerleitung 35 zwischen der Steuervorrichtung 5, insbesondere der Konstant-Stromquelle 3 und der Konstant-Spannungsquelle 32 dargestellt.

Die Konstant-Spannungsquelle 32 ist derartig ausgebildet, dass sie den Schweißbrenner 11 mit einer sehr hohen Leerlaufspannung, beispielsweise zwischen 200 V und 500 V, versorgt. Die Konstant-Stromquelle 3 versorgt den Schweißbrenner 11 mit dem Schweißstrom, der beispielsweise zwischen 20 A und 500 A liegen kann.

Es kann nunmehr gesagt werden, dass die zusätzlich angeordnete und parallel geschaltete Konstant-Spannungsquelle 32 für das Zünden des Lichtbogens 16 verwendet wird, wobei bei einem Schweißprozess nach dem Zünden des Lichtbogens 16 die Konstant-Spannungsquelle 32 deaktiviert ist und der Schweißprozess von der Konstant-Stromquelle 3 mit Energie versorgt wird.

Bei den Diagrammen, wie sie in den Fig. 3 bis 5 dargestellt sind, ist ein Kurvenverlauf für die Drahtvorschubgeschwindigkeit des Drahtvorschubgerätes 12 - Fig. 3 - und ein Spannungsverlauf - Fig. 4 - sowie Stromverlauf - Fig. 5 - an der abschmelzenden Elektrode, insbesondere am Schweißdraht 14 dargestellt.

Möchte nunmehr ein Benutzer einen Schweißprozess durchführen, so muss zuerst der Lichtbogen 16 gezündet werden. Dazu aktiviert der Benutzer das Schweißgerät 1, sodass alle Komponenten des Schweißgerätes 1, wie sie in Fig. 1 beschrieben sind, mit Strom und Spannung versorgt werden. Nachdem der Benutzer über die Ein- und/oder Ausgabevorrichtung 22 alle Einstellungen für einen Schweißprozess vorgenommen hat, kann der Benutzer beispielsweise durch Aktivieren eines Tasters, der beispielsweise am Schweißbrenner 11 angeordnet ist, den Schweißprozess starten.

Nach dem Starten des Schweißprozesses wird von der Steuervorrichtung 5 die Konstant-Stromquelle 3, insbesondere das Leistungsteil 4 und die Konstant-Spannungsquelle 32, aktiviert, d.h., dass die Konstant-Stromquelle 3 und gleichzeitig die Konstant-Spannungsquelle 32 den Schweißbrenner 11 mit Energie versorgt. Am Schweißbrenner 11 wird die über die beiden Energiequellen, insbesondere über die Konstant-Spannungsquelle 32 und die Konstant-Stromquelle 3 zugeführte Energie an den Schweißdraht 14 übergeben. Das Starten des Schweißprozesses ist aus den Diagrammen der Fig. 3 bis 5 zum Zeitpunkt 36 dargestellt. Wie nun aus den beiden Kurvenverläufen der Fig. 4 und 5 zu ersehen ist, wird der Schweißdraht 14 von der Konstant-Spannungsquelle 32 mit einer sehr hohen Gleichspannung versorgt. Die Spannung der Konstant-Spannungsquelle 32 kann dabei zwischen 200 und 500 V, insbesondere 300 V, betragen.

Nachdem die Konstant-Stromquelle 3 und die Konstant-Spannungsquelle 32 aktiviert wurden, wird zu einem weiteren Zeitpunkt 37 von der Steuervorrichtung 5 das Drahtvorschubgerät 12 aktiviert, sodass der Schweißdraht 14 von der Vorratstrommel 15 über die Fördervorrichtung 29 in Richtung des Schweißbrenners 11 und somit zum Werkstück 17 bewegt wird. Selbstverständlich ist es möglich, dass das Aktivieren des Drahtvorschubgerätes 12 gleichzeitig mit dem Aktivieren der Konstant-Stromquelle 3 und der Konstant-Spannungsquelle 32 erfolgen kann.

Zum Zeitpunkt 38 berührt nunmehr der Schweißdraht 14 das Werkstück 17, wodurch ein Kurzschluss zwischen dem positiven Potential und dem negativen Potential über den Schweißdraht 14 geschaffen wird. Aufgrund des Kurzschlusses sinkt die Spannung der Konstant-Spannungsquelle 32 auf einen Wert 39 ab, wobei gleichzeitig mit dem Kurzschluss und dem Absinken der Spannung ein sehr schneller Stromanstieg von der Konstant-Spannungsquelle 32 geschaffen wird. Dazu ist zu erwähnen, dass durch die hohe Leerlaufspannung der Konstant-Spannungsquelle 32 ein sehr steiler Stromanstieg geschaffen wird, d.h., dass beispielsweise der Stromanstieg zwischen 1500 A/ms und 20000 A/ms betragen kann. Aufgrund des schnellen und starken Stromanstieges bildet sich im Bereich des Kurzschlusses zwischen dem Schweißdraht 14 und dem Werkstück 17 eine Lichtbogensäule bzw. der Lichtbogen 16 aus, wobei diese Lichtbogensäule, insbesondere der Lichtbogen 16 eine hohe Stromdichte und einen hohen Druck zwischen dem Schweißdrahtende und dem Werkstück 17 bewirkt.

Durch den steilen Stromanstieg im Moment der Berührung des Schweißdrahtes 14 mit dem Werkstück 17 kommt es zu einer hohen Energiedichte am Schweißdrahtende, wodurch sich eine kurze Plasmasäule mit hohem Druck unter dem angeschmolzenen Material des Schweißdrahtes 14 ausbildet. Durch das Aufschmelzen des Materials des Schweißdrahtes 14 bildet sich ein flüssiger Metalltropfen am Ende des Schweißdrahtes 14, der aufgrund der Plasmasäule leicht vom Schweißdrahtende weggedrückt werden kann. Vorteilhaft ist hierbei, dass aufgrund der hohen Energiedichte, die durch den steilen Stromanstieg erreicht wird, das Schweißdrahtende sehr schnell angeschmolzen bzw. verflüssigt wird, wobei gleichzeitig das Werkstück 17 im Bereich des sich ausbildenden Lichtbogens 16 erwärmt wird. Diese Erwärmung des Werkstückes 17 und das Anschmelzen bzw. Verflüssigen des Materials des Schweißdrahtes 14 verhindert nunmehr einen vollflächigen Kontakt des Schweißdrahtendes mit dem Werkstück 17, sodass ein satter Kurzschluss, der nur durch einen sehr hohen Stromimpuls über eine gewisse Zeitdauer gelöst werden kann, verhindert wird und gleichzeitig eine sichere Zündung des Lichtbogens 16 gewährleistet ist.

Nach Ablauf einer gewissen Zeitdauer erreicht der Stromanstieg der Konstant-Spannungsquelle 32 seinen Maximalwert 40. Dies ist in Fig. 5 zum Zeitpunkt 41 ersichtlich. Nachdem der Strom seinen Maximalwert 40 erreicht hat, beginnt dieser wiederum zu sinken, wobei das Absinken des Stromes vom Maximalwert 40 nach einer Exponential-Funktion erfolgt.

Gleichzeitig beim Berühren des Schweißdrahtes 14 mit dem Werkstück 17, also im Kurzschlussfall zum Zeitpunkt 38, beginnt auch der Strom in der Konstant-Stromquelle 3, insbesondere vom Leistungsteil 4, zu steigen, d.h., dass zum Zeitpunkt 38 sowohl ein Stromanstieg von der Konstant-Spannungsquelle 32 und von der Konstant-Stromquelle 3 geschaffen wird. Da jedoch aufgrund der hohen Leerlaufspannung ein rascherer Stromanstieg von der Konstant-Spannungsquelle 32 erzielt wird, erfolgt die Zündung und Versorgung des Lichtbogens 16 mit Energie im ersten Moment von der Konstant-Spannungsquelle 32.

Aufgrund des Absinkens des Stromes von der Konstant-Spannungsquelle 32, nach Erreichen des Maximalwertes 40 und dem gleichzeitigen Ansteigen des Stromes von der Konstant-Stromquelle 3 wird zu einem Zeitpunkt 42 der Strom von der Konstant-Stromquelle 3 größer als der der Konstant-Spannungsquelle 32. Dies ist deshalb möglich, da der Benutzer beim Aktivieren bzw. für den Schweißprozess einen sehr hohen Stromwert einstellt, sodass aufgrund des Kurzschlusses zum Zeitpunkt 38 die Konstant-Stromquelle 3 den Schweißdraht 14 mit dem voreingestellten Stromwert versorgen möchte, wobei aufgrund des Absinkens des Stromes von der Konstant-Spannungsquelle 32 und dem Stromanstieg von der Konstant-Stromquelle 3 ab dem Zeitpunkt 41 eine Versorgung des Schweißdrahtes 14 über die Konstant-Stromquelle 3 geschaffen wird. Der Strom der Konstant-Stromquelle 3 steigt solange, bis dieser seinen voreingestellten Stromwert 43 erreicht, wie dies zum Zeitpunkt 44 der Fall ist. Anschließend wird nach Erreichen des Stromwertes 43 dieser von der Konstant-Stromquelle 3 konstant gehalten. Die Zeitdauer, insbesondere die Stromanstieggeschwindigkeit bis zum Erreichen des Stromwertes 43 ist abhängig von der Leerlaufspannung der Konstant-Stromquelle 3 sowie der Lichtbogenspannung und der Schweißkreisinduktivität.

Gleichzeitig mit dem Erreichen des eingestellten Stromwertes 43 wird von der Steuervorrichtung 5 die Lichtbogenspannung 45 erfasst. Die Steuervorrichtung 5 speichert den ermittelten Wert in einem Speicher ab. Daraufhin wird von der Steuervorrichtung 5 ein im Speicher hinterlegter Soll-Wert zu der ermittelten Lichtbogenspannung 45 hinzuaddiert, wodurch ein Referenzwert 46 von der Steuervorrichtung 5 bestimmt wird. Durch das Versorgen des Schweißdrahtes 14 mit dem voreingestellten Stromwert 43 wird das Drahtende weiter angeschmolzen und es steigt die Spannung und die Lichtbogenlänge am Schweißdraht 14 weiter an. Die Steuervorrichtung 5 vergleicht den ermittelten Referenzwert 46 mit der am Schweißdraht 14 anliegenden Lichtbogenspannung 45.

Die Versorgung des Schweißdrahtes 14 mit dem voreingestellten Stromwert 43 wird von der Konstant-Stromquelle 3 solange aufrechterhalten, bis die Lichtbogenspannung 45 am Schweißdraht 14 über dem voreingestellten Referenzwert 46 liegt. Dabei ist es möglich, dass beim Überschreiten der Lichtbogenspannung 45 über den Referenzwert 46 von der Steuervorrichtung 5 ein Zeitglied gestartet wird, sodass nach Ablauf einer voreinstellbaren Zeitdauer 47 ein neuer Steuervorgang durchgeführt wird.

Aus dem Diagramm ist ersichtlich, dass zum Zeitpunkt 48 die Spannung am Schweißdraht 14, insbesondere die Lichtbogenspannung 45 über den ermittelten Referenzwert 46 steigt, d.h., dass zum Zeitpunkt 48 von der Steuervorrichtung 5 das Zeitglied aktiviert wird, sodass nach Ablauf der voreingestellten Zeitdauer 47, also zum Zeitpunkt 49, von der Steuervorrichtung 5 das Leistungsteil 4 derartig ausgesteuert wird, dass der Strom auf einen voreinstellbaren Minimalwert 50 abgesenkt wird, wie dies ab dem Zeitpunkt 49 ersichtlich ist. Gleichzeitig mit dem Absenken des Stromes auf den Minimalwert 50 beginnt auch die Spannung am Schweißgerät 14, aufgrund des kürzer werdenden Lichtbogens 16, zu sinken. Von der Steuervorrichtung 5 wird nunmehr der Spannungswert, insbesondere die Lichtbogenspannung 45 überwacht, sodass durch einen laufenden Vergleich zwischen dem Ist-Wert und einem voreingestellten Minimalwert 51 die Steuervorrichtung 5 erkennen kann, dass die Spannung, insbesondere die Lichtbogenspannung 45 den Minimalwert 50 erreicht hat.

Nachdem die Spannung soweit abgesunken ist, dass sie mit dem Minimalwert 51 übereinstimmt bzw. unterhalb des Minimalwertes 51 liegt, ist der Zündprozess zum Zünden des Lichtbogens 16 mit einer Stabilisierungsphase abgeschlossen, d.h., dass nunmehr der tatsächliche Schweißprozess durchgeführt werden kann, wie dies ab einem Zeitpunkt 52 ersichtlich ist, d.h., dass beispielsweise bei einem Pulsschweißverfahren ab dem Zeitpunkt 52 von der Steuervorrichtung 5 der Pulsgenerator gestartet wird, wie dies durch Schweißimpulse 53, 54 in den Fig. 4 und 5 dargestellt ist. Auf die exakte Abwicklung der nachfolgenden Schweißprozesse wird nicht näher eingegangen, da nach dem Zündverfahren, welches zum Zeitpunkt 52 abgeschlossen ist, jedes beliebige zum Stand der Technik zählende Schweißverfahren durchgeführt werden kann.

Der Vorteil bei einem derartigen Zündprozess liegt darin, dass aufgrund der hohen Leerlaufspannung, die über die zusätzliche Konstant-Spannungsquelle 32 an den Schweißdraht 14 angelegt wird, ein sehr rascher und steiler Stromanstieg am Schweißdraht 14 erreicht wird, sodass eine sichere Zündung des Lichtbogens 16 erreicht wird. Weiters wird durch den steilen Stromanstieg verhindert, dass zwischen dem Schweißdraht 14 und dem Werkstück 17 ein satter Kurzschluss entsteht, wodurch Schweißspritzer sowie eventuell entstehende Bindefehler vermieden werden können.

Die Problematik bei einem zum Stand der Technik zählenden Verfahren liegt darin, dass es öfter zu sogenannten satten Kurzschlüssen kommen kann, bei denen der normale Stromimpuls bzw. Stromwert 43 nicht mehr ausreicht, um den Lichtbogen 16 zu zünden bzw. zu erzeugen. Dieser satte Kurzschluss kann nurmehr durch eine entsprechende Stromerhöhung bzw. andauernde Stromlieferung zum Schweißdraht 14 aufgelöst werden, wodurch der Schweißdraht 14 an einer undefinierten Stelle, die meist direkt am Kontaktrohr des Schweißbrenners 11 liegt, durchschmolzen wird. Infolge wird ein kurzes Stück des Schweißdrahtes 14 weggeschleudert, sodass der Lichtbogen 16 vom Kontaktrohr des Schweißbrenners 11 zum Werkstück 17 gezündet wird bzw. dass bei zu großem Abstand kein Lichtbogen 16 gezündet werden kann. Durch die Ausbildung eines satten Kurzschlusses entstehen große Mengen an Schweißspritzer bzw. an Einbränden, die durch die hohen Stromimpulse zur Auflösung des satten Kurzschlusses erzeugt werden.

Bei dem erfindungsgemäßen Zündverfahren werden die satten Kurzschlüsse bei der Berührung des Schweißdrahtes 14 mit dem Werkstück 17 dadurch verhindert, dass der Stromanstieg zum Zündzeitpunkt des Lichtbogens 16, also zwischen den Zeitpunkten 38 und 41 sehr steil gemacht wird, wobei der Maximalwert 40 des Stromes begrenzt ist. Dazu wird der Konstant-Stromquelle 3, insbesondere des Leistungsteils 4, eine weitere Energiequelle, insbesondere die Konstant-Spannungsquelle 32, mit sehr hoher Leerlaufspannung und begrenztem Kurzschlussstrom parallel geschaltet.

Die parallel geschaltete Konstant-Spannungsquelle 32 weist dabei einen sehr kleinen Innenwiderstand auf. Dabei ist es möglich, dass die Konstant-Spannungsquelle 32 nur zeitlich begrenzte Energie liefert. Diese Eigenschaften für die Konstant-Spannungsquelle 32 können z.B. durch einen Kondensator mit einer bestimmten Kapazität, der auf eine bestimmte Spannung, insbesondere auf die Leerlaufspannung aufgeladen wird, erreicht werden. Damit eine vorgegebene Stromanstieggeschwindigkeit erreicht wird, muss bei gegebener Schweißkreisinduktivität L die dazu notwendige Höhe der Leerlaufspannung UL nach der allgemein bekannten Formel UL = L * di/dt errechnet werden. Dabei ist es beispielsweise möglich, dass der Benutzer eine entsprechende Stromanstiegsgeschwindigkeit auswählt, worauf die Steuervorrichtung 5, die entsprechende Leerlaufspannung errechnet und die Konstant-Spannungsquelle 32 auf eine entsprechende Leerlaufspannung auflädt. Damit der Kurzschlussstrom von der Konstant-Spannungsquelle 32 begrenzt werden kann, ist es möglich, dass der Widerstand des Schweißkreises verändert wird. Dies kann insofern erfolgen, indem von der Steuervorrichtung 5 ein entsprechender Widerstand in die Versorgungsleitung 18 dazugeschaltet wird.

Selbstverständlich ist es möglich, dass zur Begrenzung des Kurzschlussstromes von der Konstant-Spannungsquelle 32, wenn diese z.B. durch einen Kondensator gebildet wird, die Kapazität verändert werden kann. Dies kann z.B. automatisch über die Steuervorrichtung 5 erfolgen.

Weiters kann anstelle der in Fig. 3 gezeigten, bevorzugt konstanten Vorschubgeschwindigkeit der abschmelzenden Elektrode die Vorschubgeschwindigkeit in Abhängigkeit der Schweißparameter bzw. in Abhängigkeit der gewünschten Schweißnaht während des Schweiß- oder auch Zündprozesses verändert werden.

Das zuvor beschriebene Verfahren wird hauptsächlich aufgrund der sicherheitstechnischen Probleme der hohen Leerlaufspannung bei automatisierten Schweißungen, wie sie bei Schweißrobotern durchgeführt wird, eingesetzt, da bei den automatisierten Schweißungen entsprechende Vorkehrungen durchgeführt werden können.

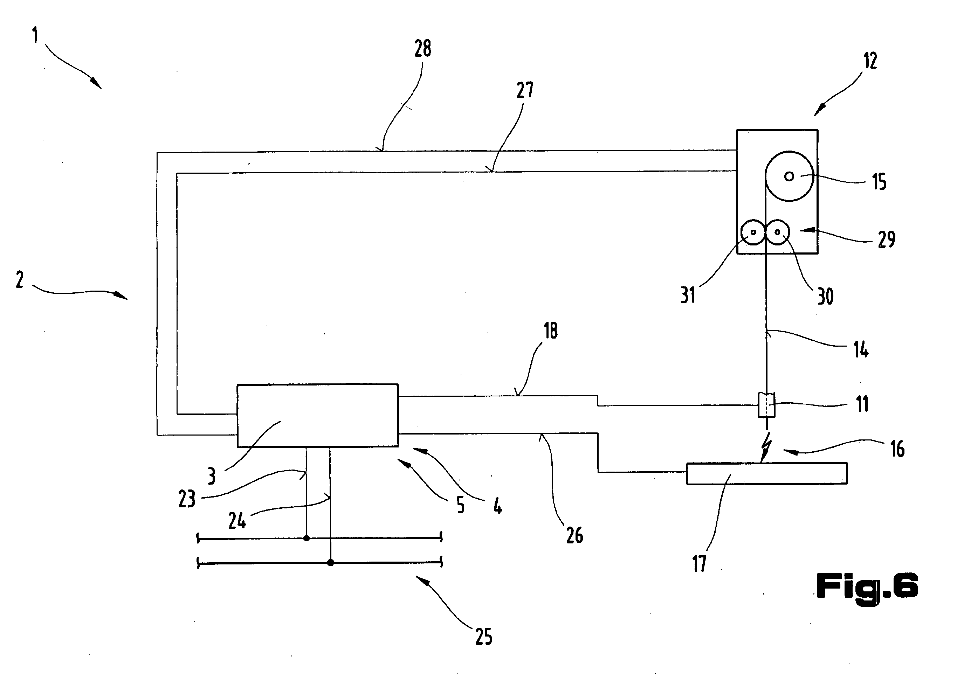

Nachfolgend wird in den Fig. 6 bis 9 ein Schweißverfahren für einen Handschweißbrenner, insbesondere für den Schweißbrenner 11 beschrieben.

Dabei ist aus Fig. 6 ein vereinfachtes Blockschaltbild der Schweißstromquelle 2, insbesondere des Schweißgerätes 1 dargestellt. Bei diesem Blockschaltbild sind in der Konstant-Stromquelle 3 die einzelnen Komponenten des Leistungsteils 4 sowie die Steuervorrichtung 5 integriert, wie dies bereits in Fig. 2 beschrieben ist. Gleichzeitig ist die Konstant-Stromquelle 3 wiederum über die Versorgungsleitungen 18, 26 mit dem Schweißbrenner 11 bzw. dem Werkstück 17 verbunden. Damit eine Steuerung des Drahtvorschubgerätes 12 erfolgen kann, ist die Steuervorrichtung 5 über die Steuerleitungen 27, 28 mit dem Drahtvorschubgerät 12 verbunden. Das Drahtvorschubgerät 12 wird wiederum durch die Vorratstrommel 15 und der Fördervorrichtung 29, die durch Förderrollen 30, 31 gebildet ist, aufgebaut.

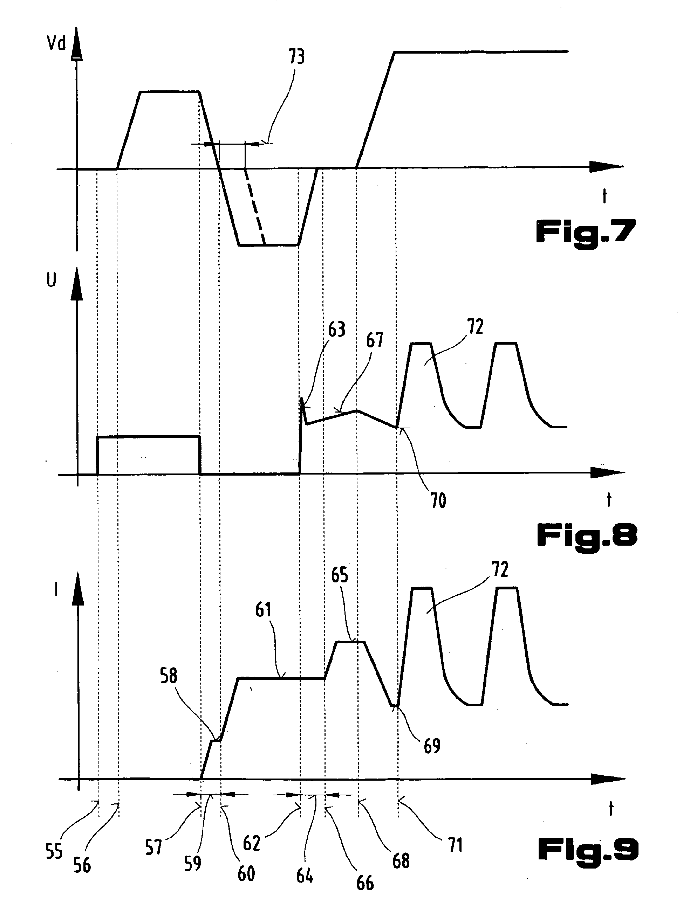

Damit nunmehr eine Zündung des Lichtbogens 16 zwischen dem Schweißdraht 14 und dem Werkstück 17 erfolgen kann, muss der nachstehend beschriebene Verfahrensablauf von der Steuervorrichtung 5 durchgeführt werden, d.h., dass entsprechend den dargestellten Kurvenverläufen der Fig. 7 bis 9 eine Steuerung der einzelnen Komponenten des Schweißgerätes 1 von der Steuervorrichtung 5 durchgeführt wird. Die Konstant-Stromquelle 3, insbesondere das Leistungsteil 4 wird bei diesem Verfahren durch eine geregelte Energiequelle gebildet.

In Fig. 7 ist ein Verlauf für die Drahtvorschubgeschwindigkeit des Schweißdrahtes 14 gezeigt, wobei auf der Ordinate die Vorschubgeschwindigkeit Vd und auf der Abszisse die Zeit t aufgetragen ist. In Fig. 8 ist der Spannungsverlauf und in Fig. 9 der Stromverlauf am Schweißdraht 14 dargestellt, wobei in Fig. 8 auf der Ordinate die Spannung U und in Fig. 9 der Strom I sowie auf der Abszisse jeweils die Zeit t aufgetragen ist.

Möchte nunmehr ein Benutzer einen Schweißprozess über den Schweißbrenner 11 starten, so kann, z.B. der Benutzer einen Taster, der am Schweißbrenner 11 angeordnet ist, betätigen, wodurch der Steuervorrichtung 5 mitgeteilt wird, dass ein Schweißprozess durchgeführt werden soll. Das Starten des Zündverfahrens wird nach Betätigung des Tasters von der Steuervorrichtung 4 bzw. der Konstant-Stromquelle 3 selbständig durchgeführt. Nachdem der Benutzer den Taster aktiviert hat, wie dies zum Zeitpunkt 55 ersichtlich ist, wird von der Steuervorrichtung 5 das Leistungsteil 4, insbesondere die Konstant-Stromquelle 3 aktiviert, d.h., dass der Schweißdraht 14 mit Energie beaufschlagt wird. Da jedoch noch kein Stromkreis zwischen dem positiven und dem negativen Potential der Konstant-Stromquelle 3 besteht, fließt kein Strom über den Schweißdraht 14, wobei jedoch die Leerlaufspannung - die vom Benutzer frei einstellbar ist - am Schweißdraht 14 anliegt. Anschließend, also zum Zeitpunkt 56, wird von der Steuervorrichtung 5 das Drahtvorschubgerät 12 aktiviert, wodurch eine Vorwärtsbewegung des Schweißdrahtes 14 in Richtung des Werkstückes 17 durchgeführt wird. Dazu ist es z.B. möglich, dass bei Verwendung eines Handschweißbrenners der Benutzer einen bestimmten Abstand zwischen dem Werkstück 17 und dem Schweißbrenner 11 bildet. Selbstverständlich ist es möglich, dass das Starten des Drahtvorschubgerätes 12 mit dem Aktivieren des Leistungsteiles 4 bzw. der Konstant-Stromquelle 3 zusammenfallen kann.

Durch das Beaufschlagen des Drahtvorschubgerätes 12 mit einer z.B. positiven Spannung wird nunmehr der Drahtvorschub für den Schweißdraht 14 in Richtung des Werkstückes 17 aktiviert. Zu einem Zeitpunkt 57 berührt der Schweißdraht 14 das Werkstück 17, wodurch ein Kurzschluss zwischen dem Schweißdraht 14 und dem Werkstück 17 gebildet wird. Aufgrund des Kurzschlusses wird nunmehr ein Stromfluss zwischen dem positiven Potential und dem negativen Potential der Konstant-Stromquelle 3 aufgebaut, wobei die Spannung am Schweißdraht 14 zusammenbricht und gleichzeitig der Strom über den Schweißdraht 14 zu steigen beginnt. Hierzu wird der Strom von der Konstant-Stromquelle 3 bzw. vom Leistungsteil 4 auf einen voreinstellbaren Wert 58 angehoben, d.h., dass nicht, wie bei den zuvor beschriebenen Verfahren ein sehr hoher Strom an den Schweißdraht 14 angelegt wird, sondern dass der Wert 58 unterhalb des Schmelzpunktes des Schweißdrahtes 14 liegt, wodurch ein Festkleben des Schweißdrahtes 14 am Werkstück 17, was bedeuten würde, dass ein satter Kurzschluss entsteht, verhindert wird.

Gleichzeitig mit dem Entstehen des Kurzschlusses zwischen dem Schweißdraht 14 und dem Werkstück 17 wird von der Steuervorrichtung 5 ein Zeitglied aktiviert, sodass eine voreinstellbare Zeitdauer 59 zu laufen beginnt. Weiters wird das Spannungssignal zum Drahtvorschubgerät 12 unterbrochen, sodass die Vorwärtsbewegung des Schweißdrahtes 14 gestoppt wird.

Nach Ablauf der Zeitdauer 59, wie dies zum Zeitpunkt 60 der Fall ist, wird von der Steuervorrichtung 5 das Drahtvorschubgerät 12 derart angesteuert, dass nunmehr kein positives Spannungssignal an das Drahtvorschubgerät 12 übersandt wird, sondern ein z.B. negatives Spannungssignal, sodass eine Umkehrung, also eine Rückwärtsbewegung des Schweißdrahtes 14 vom Drahtvorschubgerät 12 durchgeführt wird. Gleichzeitig wird von der Steuervorrichtung 5 das Leistungsteil 4, insbesondere die Konstant-Stromquelle 3 derart angesteuert, dass eine Stromwerterhöhung auf einen Wert 61 durchgeführt wird. Aufgrund der abermaligen Erhöhung des Stromes auf den Wert 61 wird der Schweißdraht 14 weiter erwärmt, wobei jedoch keine Abschmelzung des Schweißdrahtes 14 erfolgt, d.h., dass der Schweißdraht 14 aufgrund des Stromflusses nur weiter erwärmt wird, sodass eine leichte Zündung des Lichtbogens 16 durchgeführt werden kann.

Hebt durch die Rückwärtsbewegung der Schweißdraht 14 vom Werkstück 17 ab, so wird der Kurzschluss zwischen dem Schweißdraht 14 und dem Werkstück 17 beendet, wie dies beim Zeitpunkt 62 der Fall ist. Gleichzeitig bildet sich der Lichtbogen 16 zwischen dem Werkstück 17 und dem Schweißdraht 14 aus. Durch das Ausbilden des Lichtbogens 16 entsteht am Schweißdraht 14 eine Lichtbogenspannung 63, wobei von der Steuervorrichtung 5 der Spannungsverlauf der Lichtbogenspannung 63 überwacht wird, sodass bei Feststellung einer Lichtbogenspannung 63 von der Steuervorrichtung 5 ein Zeitglied mit voreinstellbarer Zeitdauer 64 aktiviert wird, d.h., dass durch die Ausbildung der Lichtbogenspannung 63 die Steuervorrichtung 5 erkennen kann, dass der Lichtbogen 16 gezündet wurde, sodass über diese Zeitdauer 64 der Lichtbogen 16 mit einem konstanten Strom versorgt wird und somit ein Abreißen des Lichtbogens 16 verhindert werden kann. Gleichzeitig mit dem Abheben des Schweißdrahtes 14 vom Werkstück 17 bzw. mit der Zündung des Lichtbogens 16 wird die Rückwärtsbewegung des Schweißdrahtes 14 gestoppt bzw. kann diese auf eine geringere Geschwindigkeit reduziert werden und anschließend in eine Vorwärtsbewegung umgewandelt werden.

Nach Ablauf der voreinstellbaren Zeitdauer 64 wird der Wert 61 des Stromes auf einen weiteren höheren Wert 65 angehoben, wie dies ab dem Zeitpunkt 66 ersichtlich ist, wobei anschließend die Stromversorgung des Schweißdrahtes 14 mit diesem Wert 65 konstant gehalten, das Drahtende angeschmolzen wird und ein Anstieg der Lichtbogenspannung 63 erfolgt. Gleichzeitig wird von der Steuervorrichtung 5 die Lichtbogenspannung 63 erfasst, sodass beim Erreichen eines voreingestellten Soll-Wertes 67 bzw. bei Überschreiten dieses Soll-Wertes 67 über eine voreinstellbare Zeitdauer der Strom abgesenkt werden kann. Dies ist insofern notwendig, da aufgrund der Steigerung des Stromes das Material am Schweißdraht 16 abschmilzt, sodass eine entsprechende Lichtbogenlänge zwischen dem Werkstück 17 und dem Schweißdraht 14 ausgebildet wird.

Steigt nunmehr die Lichtbogenspannung 63 über den Soll-Wert 67, wie dies zum Zeitpunkt 68 der Fall ist, so wird von der Steuervorrichtung 5 das Drahtvorschubgerät 12 mit einem positiven Potential beaufschlagt, sodass die Vorwärtsbewegung des Schweißdrahtes 14 eingeleitet wird. Dazu wird nunmehr das Drahtvorschubgerät 12 derartig angesteuert, dass die tatsächliche Schweißdrahtgeschwindigkeit, die für den Schweißprozess notwendig ist, eingestellt wird. Gleichzeitig mit dem Aktivieren des Drahtvorschubgerätes 12 für die Vorwärtsbewegung des Schweißdrahtes 14 wird der Strom vom Wert 65 auf einen vorgegebenen Wert 69 abgesenkt. Der Wert 69 entspricht dabei dem Minimalwert zum Versorgen des Lichtbogens 16, sodass ein Abreißen des Lichtbogens 16 verhindert wird. Gleichzeitig wird von der Steuervorrichtung 5 die Lichtbogenspannung 63 am Schweißbrenner 11 überwacht, wodurch beim Erreichen eines Minimalwertes 70 der Lichtbogenspannung 63 die Steuervorrichtung 5 erkennen kann, dass der Zündprozess zum Zünden des Lichtbogens 16 abgeschlossen ist, wie dies zum Zeitpunkt 71 der Fall ist.

Nachdem die Lichtbogenspannung 63 auf den Minimalwert 70 abgesunken ist, wird von der Steuervorrichtung 5 der eigentliche Schweißprozess durchgeführt, d.h., dass beispielsweise beim Einstellen eines Pulsschweißprozesses ab dem Zeitpunkt 71 der tatsächliche Schweißprozess beginnt und die Konstant-Stromquelle 3 bzw. die Steuervorrichtung 5 einen Pulsgenerator startet, sodass einzelne Schweißimpulse 72 ausgesendet werden können. Selbstverständlich ist es möglich, dass nach dem Zünden des Lichtbogens 16, also beim Beenden des Zündverfahrens zum Zeitpunkt 71, jedes beliebige andere Schweißverfahren durchgeführt werden kann.

Der Vorteil eines derartigen Zündverfahrens liegt darin, dass aufgrund der stufenweisen Anhebung des Stromes an dem Schweißbrenner 11, insbesondere am Schweißdraht 14, eine kontinuierliche Erwärmung des Schweißdrahtes 14 erfolgt, sodass Schweißspritzer sowie satte Kurzschlüsse an der Schweißstelle verhindert werden.

Weiters ist es möglich, wie strichliert in Fig. 7 dargestellt, dass zum Zeitpunkt 60, wo die Steuervorrichtung 5 die Rückwärtsbewegung des Schweißdrahtes 14 einleitet, vor der Rückwärtsbewegung und der Stromanhebung auf den Wert 61 der Schweißdraht 14 noch über eine voreinstellbare Zeitdauer 73 am Werkstück 17 positioniert bleibt, d.h., dass der Kurzschluss über diese Zeitdauer 73 aufrechterhalten wird. Dies ist deshalb vorteilhaft, da dadurch eine bessere Erwärmung des Schweißdrahtes 14 erreicht wird, wodurch eine noch sicherere Zündung des Lichtbogens 16 geschaffen werden kann.

Selbstverständlich ist es möglich, dass für die Vorwärts- und Rückwärtsbewegung des Schweißdrahtes 14 der Schweißbrenner 11 selbst entsprechend bewegt werden kann, wobei der Start des Drahtvorschubgerätes 12 erst nach Zündung des Lichtbogens 16 erfolgt, d.h., dass eine ständige Überwachung der Steuervorrichtung 5 über die Lichtbogenspannung 63 durchgeführt wird, sodass durch die Bewegung des Schweißbrenners 11 nur eine Vorwärtsbewegung des Drahtvorschubgerätes 12 durchgeführt werden muss. Damit eine Zündung von Hand über den Schweißbrenner 11 durchgeführt werden kann, muss der Benutzer zur Zündung des Lichtbogens 16 den Schweißbrenner 11 in Richtung des Werkstückes 17 bewegen, sodass der Schweißdraht 14 mit dem Werkstück einen Kurzschluss bildet. Anschließend hebt der Benutzer den Schweißbrenner 11 vom Werkstück 17 ab, wodurch die Zündung des Lichtbogens 16 erfolgt. Durch die Überwachung der Lichtbogenspannung 63 von der Steuervorrichtung 5 kann diese nun erkennen, dass der Lichtbogen 16 gezündet wurde, sodass das Drahtvorschubgerät 12 aktiviert wird und eine Vorwärtsbewegung des Schweißdrahtes 14 erfolgt.

Selbstverständlich ist es möglich, dass dieses Verfahren durch einen Roboter automatisiert werden kann, d.h., dass durch Schwenken des Roboterarmes eine entsprechende Bewegung des Schweißbrenners 14 durchgeführt wird. Vorteilhaft ist hierbei, dass durch die Bewegung des Schweißbrenners 11 das Drahtvorschubgerät 12 nur für die Vorwärtsbewegung ausgelegt werden muss, sodass Kosten bei der Herstellung für das Drahtvorschubgerät 12 eingespart werden können.

Das zuvor beschriebene Verfahren kann selbstverständlich für Schweißroboter als auch für manuelle Handschweißbrenner eingesetzt werden.

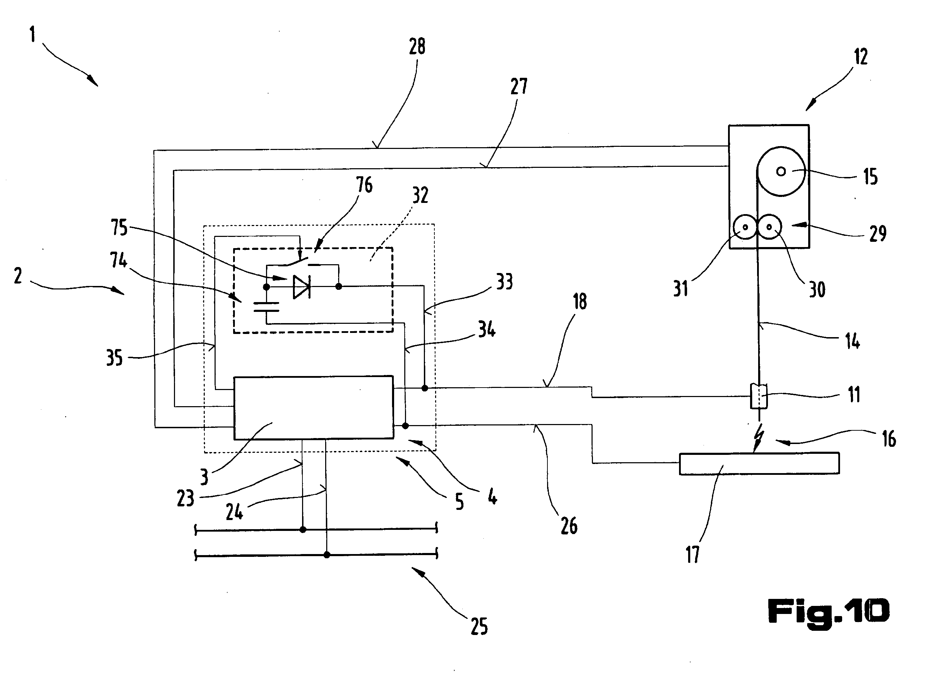

Fig. 10 zeigt ein anderes Ausführungsbeispiel der Schweißstromquelle 2 mit der Konstant-Stromquelle 3 und der Konstant-Spannungsquelle 32, wobei hierbei die Konstant-Spannungsquelle 32 vom Ausgang der Konstant-Stromquelle 3 gespeist wird. Es wird also die Konstant-Stromquelle 3 gleichzeitig dazu verwendet, um die Konstant-Spannungsquelle 32, insbesondere gebildet durch einen Kondensator 74 aufzuladen. Eine Serienschaltung des Kondensators 74 mit einer Diode 75 ist dabei derart mit dem Ausgang der Konstant-Stromquelle 3 bzw. mit den Versorgungsleitungen 18, 26 verbunden, dass die Kathode der Diode 75 mit dem positiven Potential, dem gemäß mit der Versorgungsleitung 18 verbunden ist und der verbleibende Anschluss des Kondensators 74 mit dem negativen Potential, beispielsgemäß mit der Versorgungsleitung 26 verbunden ist. Der Diode 75 ist ein Schalter 76 parallel geschaltet, dessen Steuereingang über die Steuerleitung 35 mit der Konstant-Stromquelle 3 oder auch mit der Steuervorrichtung 5 verbunden ist, um in den leitenden und sperrenden Zustand versetzt werden zu können.

Mittels dem Ausgang der Konstant-Stromquelle 3 wird also die Konstant-Spannungsquelle 32, insbesondere der Kondensator 74 aufgeladen. Die Diode 75 dient der Entkopplung des Schweißstromkreises während der Schweißung.

Die Konstant-Stromquelle 3 ist aufgrund ihrer Auslegung bzw. ihres Leistungsteilkonzeptes in der Lage, nach dem Startbefehl eine entsprechend hohe Leerlaufspannung zu liefern, sodass über den von der Konstant-Stromquelle 3 oder auch von der Steuervorrichtung 5 gesteuerten, in der Startphase leitenden Schalter 76 der Kondensator 74 auf eine entsprechend hohe Spannung, von beispielsweise 200 V aufgeladen wird. Nachdem der bevorzugt voreinstellbare Spannungswert am Kondensator 74 erreicht ist, wird der Schalter 76 geöffnet bzw. in den Sperrzustand versetzt und die Leerlaufspannung der Konstant-Stromquelle 3 auf einen den Sicherheitsvorschriften entsprechenden Wert abgesenkt und nachfolgend das Drahtvorschubgerät 12 aktiviert. Tritt innerhalb einer bestimmten, relativ kurzen Zeitspanne, beispielsweise von 300 ms nach dem Start der Konstant-Stromquelle 3 keine Berührung des dem Werkstück 17 zugeordneten Endes des Schweißdraht 14 mit dem Werkstück 17 auf, so wird der Schalter 76 abermals geschlossen und die Spannung des Kondensators 74 auf einen den Sicherheitsvorschriften entsprechenden Wert abgesenkt.

Berührt innerhalb von beispielsweise 300 ms das Schweißdrahtende das Werkstück 17, so wird durch die Konstant-Spannungsquelle 32 bzw. den Kondensator 74 ebenso ein steiler Stromanstieg auf den Maximalwert 40 - Fig. 5 - erzielt, worauf nach Erreichen dieses Maximalwertes 40 der von der Konstant-Spannungsquelle 32, insbesondere dem Kondensator 74 abgegebene Strom absinkt und der Lichtbogen 16 durch den ansteigenden Strom von der Konstant-Stromquelle 3 aufrecht erhalten wird.

Es kann also festgehalten werden, dass die Konstant-Spannungsquelle 32, wenn diese parallel mit der Konstant-Stromquelle 3 geschaltet ist, keine eigene Ladeschaltung besitzen muss, und in der Startphase der Konstant-Stromquelle 3 vom Ausgang der Konstant-Stromquelle 3 selbst auf einen entsprechenden hohen Spannungswert aufgeladen wird.

Unabhängig von der zuvor beschriebenen Parallelschaltung der Konstant-Stromquelle 3 und der Konstant-Spannungsquelle 32 ist es selbstverständlich auch möglich, die Konstant-Spannungsquelle 32 mit der Konstant-Stromquelle 3 in Serie zu schalten. Hierzu ist die Konstant-Spannungsquelle 32 in eine der Versorgungsleitungen 18 oder 26 am Ausgang der Konstant-Stromquelle 3 zu schalten. Die Konstant-Spannungsquelle 32 besitzt dabei eine eigene Ladeschaltung und wird insbesondere während der Startphase der Konstant-Stromquelle 3 über die Steuerleitung 35 in den Zustand für Energieaufnahme bzw. Ladungserhalt versetzt. Diese Versorgung der Konstant-Spannungsquelle 32 mit der im Vergleich während des eingeleiteten Schweißprozesses relativ hohen Spannung von über 100 V erfolgt noch bevor der Schweißstromkreis geschlossen wird, also noch bevor die Elektrode, beispielsweise der Schweißdraht 14 das Werkstück 17 kontaktiert. Nachdem aus der Konstant-Spannungsquelle 32 der verhältnismäßig hohe Spannungswert von über 100 V verfügbar ist, kann der Schweißstromkreis, z.B. durch Aktivieren des Drahtvorschubgerätes 12 geschlossen werden, wodurch beim erstmaligen Berühren der Elektrode mit dem Werkstück 17 sowohl die elektrische Energie der Konstant-Stromquelle 3 als auch die elektrische Energie der Konstant-Spannungsquelle 32 zur Verfügung steht und letztere beim erstmaligen Kontakt mit dem Werkstück 17 den steilen Stromanstieg auf den bevorzugt voreinstellbaren Maximalwert 40 - Fig. 5 - bewirkt.

Es kann also festgehalten werden, dass die Konstant-Spannungsquelle 32, wenn diese in Serie mit der Konstant-Stromquelle 3 geschaltet ist, eine eigene Ladeschaltung umfasst und in der Startphase der Konstant-Stromquelle 3 über die Steuerleitung 35 die Ladeschaltung aktiviert wird und der Kondensator 74 aufgeladen wird.

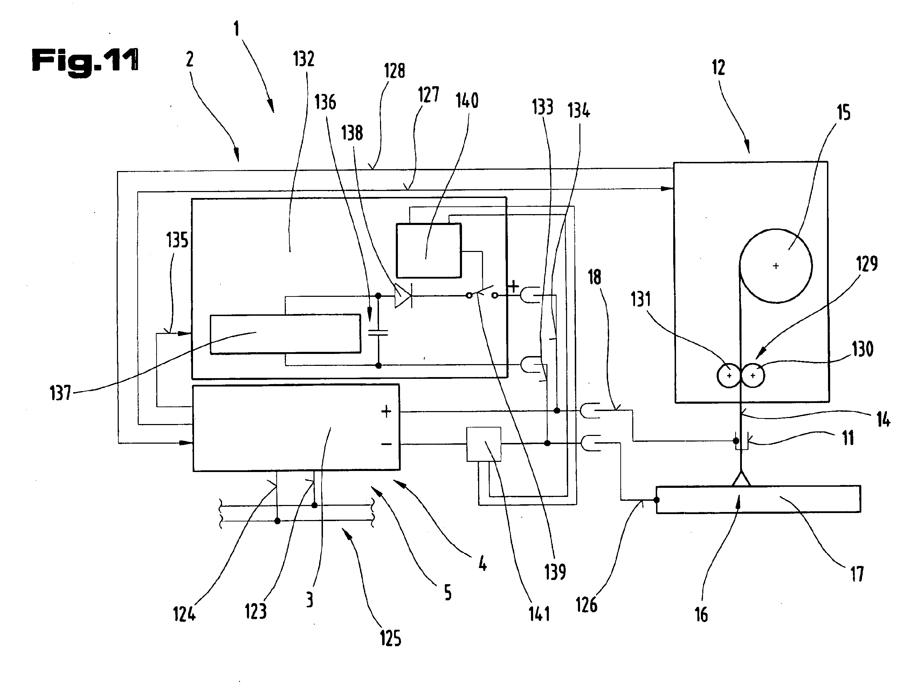

In den Fig. 11 bis 14 ist ein Verfahrensablauf zum Zünden des Lichtbogens 16 zwischen dem Werkstück 17 und einer abzuschmelzenden Elektrode, insbesondere dem Schweißdraht 14, gezeigt, wobei in Fig. 11 ein vereinfachtes Blockschaltbild der Schweißstromquelle 2, insbesondere des Schweißgerätes 1, dargestellt ist. Bei diesem Blockschaltbild sind in der Konstant-Stromquelle 3 die Komponenten des Leistungsteil 4 und der Steuervorrichtung 5, wie sie in Fig. 1 beschrieben sind, integriert.

Bei dem dargestellten Blockschaltbild sind die weiteren in Fig. 1 beschriebenen Komponenten mit der Konstant-Stromquelle 3 leitungsverbunden, sodass eine Aktivierung, beispielsweise der Kühlung, durch die Konstant-Stromquelle 3, insbesondere der Steuervorrichtung 5, möglich ist. In Fig. 11 sind nur die für das Zünden des Lichtbogens 16 notwendigen Komponenten dargestellt. Dazu ist die Konstant-Stromquelle 3 über Versorgungsleitungen 123, 124 mit einem Spannungsversorgungsnetz 125 verbunden, sodass die einzelnen Komponenten des Schweißgeräts 1 mit Strom und Spannung versorgt werden können.

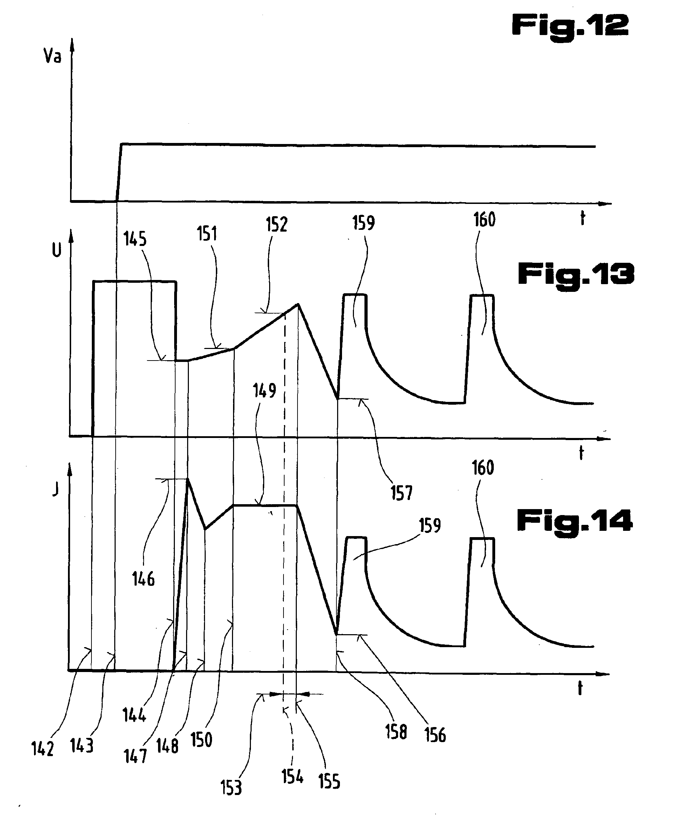

In den Fig. 12 bis 14 sind in Form von Diagrammen Verfahrensabläufe dargestellt, wobei in den Fig. 13 und 14 auf der Ordinate die Spannung U bzw. der Strom I sowie auf der Abszisse die Zeit t aufgetragen sind.

Bei dem dargestellten Blockschaltbild in Fig. 11 ist die Konstant-Stromquelle 3 über die Versorgungsleitung 18 mit dem schematisch dargestellten Schweißbrenner 11 verbunden, wogegen das Werkstück 17 über eine weitere Versorgungsleitung 126 mit der Konstant-Stromquelle 3 verbunden ist. Bei dem dargestellten Ausführungsbeispiel wird der Schweißbrenner 11 über die Versorgungsleitung 18 mit dem positiven Potential versorgt, wogegen das negative Potential über die Versorgungsleitung 126 am Werkstück 17 angelegt ist. Gleichzeitig weist die Konstant-Stromquelle 3 Steuerleitungen 127, 128 auf, die mit dem Drahtvorschubgerät 12 verbunden sind. Bei dem Drahtvorschubgerät 12 sind die Vorratstrommel 15 sowie eine Fördervorrichtung 129 zum Befördern des Schweißdrahtes 14 an den Schweißbrenner 11 dargestellt. Die Fördervorrichtung 129 kann aus zwei Förderrollen 130, 131 gebildet werden, wobei zumindest eine der beiden Förderrollen 130, 131 über einen nicht dargestellten Motor angetrieben wird.

Weiters ist in Fig. 11 eine zusätzliche Konstant-Spannungsquelle 132 parallel zur Konstant-Stromquelle 3 geschaltet, d.h., dass die Ausgänge der Konstant-Spannungsquelle 132 über Leitungen 133, 134 mit den Versorgungsleitungen 18, 126 bzw. den Ausgängen der Konstant-Stromquelle 3 verbunden sind. Dabei ist das positive Potential der Konstant-Spannungsquelle 132 wiederum mit dem positiven Potential der Konstant-Stromquelle 3 zusammengeschaltet. Damit die Konstant-Spannungsquelle 132 von der Steuervorrichtung 5 angesteuert werden kann, ist eine Steuerleitung 135 zwischen der Steuervorrichtung 5, insbesondere der Konstant-Stromquelle 3 und der Konstant-Spannungsquelle 132 dargestellt.

Die Konstant-Spannungsquelle 132 ist derartig ausgebildet, dass sie den Schweißbrenner 11 mit einer sehr hohen Leerlaufspannung, beispielsweise zwischen 200 V und 500 V, versorgt. Die Konstant-Stromquelle 3 versorgt den Schweißbrenner 11 mit dem Schweißstrom, der beispielsweise zwischen 20 A und 500 A liegen kann. Es kann nunmehr gesagt werden, dass die zusätzlich angeordnete und parallel geschaltete Konstant-Spannungsquelle 132 für das Zünden des Lichtbogens 16 verwendet wird, wobei bei einem Schweißprozess nach dem Zünden des Lichtbogens 16 die Konstant-Spannungsquelle 132 deaktiviert ist und der Schweißprozess von der Konstant-Stromquelle 3 mit Energie versorgt wird.

Zur Zündung des Lichtbogens 16 wird die Energie der Konstant-Spannungsquelle 132 der Energie der Konstant-Stromquelle 3 überlagert. Die Energie der Konstant-Spannungsquelle 132 wird in Abhängigkeit eines voreinstellbaren Stromwertes und/oder Stromanstieges der Konstant-Stromquelle 3 zugeschaltet. Die Konstant-Spannungsquelle 132 besteht aus einem Energiespeicher, insbesondere einem Kondensator 136, der über eine Aufladevorrichtung 137 auf einen voreinstellbaren Spannungswert aufladbar ist. In Serie zum Kondensator 136 ist eine Diode 138 sowie ein elektronischer Schalter 139 geschaltet. Die Serienschaltung des Kondensators 136 mit der Diode 138 ist dabei derart mit dem Ausgang der Konstant-Stromquelle 3 bzw. mit den Versorgungsleitungen 18, 126 verbunden, dass die Kathode der Diode 138 mit dem positiven Potential, demgemäss mit der Versorgungsleitung 18, verbunden ist und der verbleibende Anschluss des Kondensators 136 mit dem negativen Potential, beispielsgemäß mit der Versorgungsleitung 126, verbunden ist.

Der elektronische Schalter 139 ist über eine Steuereinrichtung 140 ansteuerbar, wobei die Steuereinrichtung 140 über einen Signalgeber, beispielsweise einen Stromwandler 141, aktivierbar ist. Der Stromwandler 141 ist im Stromkreis der Konstant-Stromquelle 3 zum Schweißbrenner 11 bzw. zum Werkstück 17 angeordnet. Zum Zünden des Lichtbogens 16 berührt der Schweißbrenner 11 bzw. der Schweißdraht 14 das Werkstück 17, wodurch der Stromkreis geschlossen wird und ein Strom von der Konstant-Stromquelle 3 über die Versorgungsleitungen 18, 126 fließt. Der Stromwandler 141 reagiert auf diesen Strom bzw. auf diesen Stromanstieg und aktiviert die Steuereinrichtung 140, die wiederum den elektronischen Schalter 139 schließt und die Energie der Konstant-Spannungsquelle 132 der Energie der Konstant-Stromquelle 3 überlagert, und somit steht zum Zünden des Lichtbogens 16 eine hohe Leerlaufspannung zur Verfügung.

Bei den Diagrammen, wie sie in den Fig. 12 bis 14 dargestellt sind, ist ein Kurvenverlauf für die Drahtvorschubgeschwindigkeit des Drahtvorschubgerätes 12 - Fig. 12 - und ein Spannungsverlauf - Fig. 13 - sowie Stromverlauf - Fig. 14 - an der abzuschmelzenden Elektrode, insbesondere am Schweißdraht 14 dargestellt.

Möchte nunmehr ein Benutzer einen Schweißprozess durchführen, so muss zuerst der Lichtbogen 16 gezündet werden. Dazu aktiviert der Benutzer das Schweißgerät 1, sodass alle Komponenten des Schweißgerätes 1, wie sie in Fig. 1 beschrieben sind, mit Strom und Spannung versorgt werden. Nachdem der Benutzer über die Ein- und/oder Ausgabevorrichtung 22 alle Einstellungen für einen Schweißprozess vorgenommen hat, kann der Benutzer beispielsweise durch Aktivieren eines Tasters, der beispielsweise am Schweißbrenner 11 angeordnet ist, den Schweißprozess starten.

Nach dem Starten des Schweißprozesses wird von der Steuervorrichtung 5 die Konstant-Stromquelle 3, insbesondere das Leistungsteil 4 und die Aufladevorrichtung 137, für die Konstant-Spannungsquelle 132 aktiviert, d.h., dass die Konstant-Stromquelle 3 vorerst den Schweißbrenner 11 mit Energie versorgt. Am Schweißbrenner 11 wird die Energie an den Schweißdraht 14 übergeben. Das Starten des Schweißprozesses ist aus den Diagrammen der Fig. 12 bis 14 zu einem Zeitpunkt 142 dargestellt. Wie nun aus den beiden Kurvenverläufen der Fig. 13 und 14 zu ersehen ist, wird der Schweißdraht 14 von der Konstant-Stromquelle 3 mit der Leerlaufspannung versorgt.

Nachdem die Konstant-Stromquelle 3 aktiviert wurde, wird zu einem weiteren Zeitpunkt 143 von der Steuervorrichtung 5 das Drahtvorschubgerät 12 aktiviert, sodass der Schweißdraht 14 von der Vorratstrommel 15 über die Fördervorrichtung 129 in Richtung des Schweißbrenners 11 und somit zum Werkstück 17 bewegt wird. Selbstverständlich ist es möglich, dass das Aktivieren des Drahtvorschubgerätes 12 gleichzeitig mit dem Aktivieren der Konstant-Stromquelle 3 erfolgen kann.

Zu einem Zeitpunkt 144 berührt nunmehr der Schweißdraht 14 das Werkstück 17, wodurch ein Kurzschluss zwischen dem positiven Potential und dem negativen Potential über den Schweißdraht 14 geschaffen wird. In den Versorgungsleitungen 18, 126 fließt ein Strom, worauf der Stromwandler 141 die Steuereinrichtung 140 aktiviert, die wiederum den elektronischen Schalter 139 schließt. Aufgrund des Kurzschlusses sinkt die Spannung der Konstant-Stromquelle 3 auf einen Wert 145 ab, wobei gleichzeitig mit dem Kurzschluss und dem Absinken der Spannung ein sehr schneller Stromanstieg von der Konstant-Spannungsquelle 132 geschaffen wird. Dazu ist zu erwähnen, dass durch die hohe Leerlaufspannung der Konstant-Spannungsquelle 132 ein sehr steiler Stromanstieg geschaffen wird, d.h., dass beispielsweise der Stromanstieg zwischen 1500 A/ms und 20000 A/ms betragen kann. Aufgrund des schnellen und starken Stromanstieges bildet sich im Bereich des Kurzschlusses zwischen dem Schweißdraht 14 und dem Werkstück 17 eine Lichtbogensäule bzw. der Lichtbogen 16 aus, wobei diese Lichtbogensäule, insbesondere der Lichtbogen 16, eine hohe Stromdichte und einen hohen Druck zwischen dem Schweißdrahtende und dem Werkstück 17 bewirkt.

Durch den steilen Stromanstieg im Moment der Berührung des Schweißdrahtes 14 mit dem Werkstück 17 kommt es zu einer hohen Energiedichte am Schweißdrahtende, wodurch sich eine kurze Plasmasäule mit hohem Druck unter dem angeschmolzenen Material des Schweißdrahtes 14 ausbildet. Durch das Aufschmelzen des Materials des Schweißdrahtes 14 bildet sich ein flüssiger Metalltropfen am Ende des Schweißdrahtes 14, der aufgrund der Plasmasäule leicht vom Schweißdrahtende weggedrückt werden kann. Vorteilhaft ist hierbei, dass aufgrund der hohen Energiedichte, die durch den steilen Stromanstieg erreicht wird, das Schweißdrahtende sehr schnell angeschmolzen bzw. verflüssigt wird, wobei gleichzeitig das Werkstück 17 im Bereich des sich ausbildenden Lichtbogens 16 erwärmt wird. Diese Erwärmung des Werkstückes 17 und das Anschmelzen bzw. Verflüssigen des Materials des Schweißdrahtes 14 verhindert nunmehr einen vollflächigen Kontakt des Schweißdrahtendes mit dem Werkstück 17, sodass ein satter Kurzschluss, der nur durch einen sehr hohen Stromimpuls über eine gewisse Zeitdauer gelöst werden kann, verhindert wird und gleichzeitig eine sichere Zündung des Lichtbogens 16 gewährleistet ist.

Nach Ablauf einer gewissen Zeitdauer erreicht der Stromanstieg der Konstant-Spannungsquelle 132 einen Maximalwert 146. Dies ist in Fig. 14 zu einem Zeitpunkt 147 ersichtlich. Nachdem der Strom seinen Maximalwert 146 erreicht hat, beginnt dieser wiederum zu sinken, wobei das Absinken des Stromes vom Maximalwert 146 nach einer Exponential-Funktion erfolgt.

Gleichzeitig beim Berühren des Schweißdrahtes 14 mit dem Werkstück 17, also im Kurzschlussfall zum Zeitpunkt 144, beginnt auch der Strom in der Konstant-Stromquelle 3, insbesondere vom Leistungsteil 4, zu steigen, d.h., dass zum Zeitpunkt 144 sowohl ein Stromanstieg von der Konstant-Spannungsquelle 132 und von der Konstant-Stromquelle 3 geschaffen wird. Da jedoch aufgrund der hohen Leerlaufspannung ein rascherer Stromanstieg von der Konstant-Spannungsquelle 132 erzielt wird, erfolgt die Zündung und Versorgung des Lichtbogens 16 mit Energie im ersten Moment von der Konstant-Spannungsquelle 132.

Aufgrund des Absinkens des Stromes von der Konstant-Spannungsquelle 132 nach Erreichen des Maximalwertes 146 und dem gleichzeitigen Ansteigen des Stromes von der Konstant-Stromquelle 3 wird zu einem Zeitpunkt 148 der Strom von der Konstant-Stromquelle 3 größer als der der Konstant-Spannungsquelle 132. Dies ist deshalb möglich, da der Benutzer beim Aktivieren bzw. für den Schweißprozess einen entsprechenden Stromwert einstellt, sodass aufgrund des Kurzschlusses zum Zeitpunkt 144 die Konstant-Stromquelle 3 den Schweißdraht 14 mit dem voreingestellten Stromwert versorgen möchte, sodass aufgrund des Absinkens des Stromes von der Konstant-Spannungsquelle 132 und dem Stromanstieg von der Konstant-Stromquelle 3, beispielsweise ab dem Zeitpunkt 147, eine Versorgung des Schweißdrahtes 14 über die Konstant-Stromquelle 3 geschaffen wird. Der Strom der Konstant-Stromquelle 3 steigt solange, bis dieser einen voreingestellten Stromwert 149 erreicht, wie dies zu einem Zeitpunkt 150 der Fall ist. Anschließend wird nach Erreichen des Stromwertes 149 dieser von der Konstant-Stromquelle 3 konstant gehalten. Die Zeitdauer, insbesondere die Stromanstieggeschwindigkeit bis zum Erreichen des Stromwertes 149 ist abhängig von der Leerlaufspannung der Konstant-Stromquelle 3 sowie einer Lichtbogenspannung 151 und der Schweißkreisinduktivität.

Gleichzeitig mit dem Erreichen des eingestellten Stromwertes 149 wird von der Steuervorrichtung 5 die Lichtbogenspannung 151 erfasst. Die Steuervorrichtung 5 speichert den ermittelten Wert in einem Speicher ab. Daraufhin wird von der Steuervorrichtung 5 ein im Speicher hinterlegter Soll-Wert zu der ermittelten Lichtbogenspannung 151 hinzuaddiert, wodurch ein Referenzwert 152 von der Steuervorrichtung 5 bestimmt wird. Durch das Versorgen des Schweißdrahtes 14 mit dem voreingestellten Stromwert 149 wird das Drahtende weiter angeschmolzen und es steigt die Spannung und die Lichtbogenlänge am Schweißdraht 14 weiter an. Die Steuervorrichtung 5 vergleicht den ermittelten Referenzwert 152 mit der am Schweißdraht 14 anliegenden Lichtbogenspannung 151.

Die Versorgung des Schweißdrahtes 14 mit dem voreingestellten Stromwert 149 wird von der Konstant-Stromquelle 3 solange aufrechterhalten, bis die Lichtbogenspannung 151 am Schweißdraht 14 über dem voreingestellten Referenzwert 152 liegt. Dabei ist es möglich, dass beim Überschreiten der Lichtbogenspannung 151 über den Referenzwert 152 von der Steuervorrichtung 5 ein Zeitglied gestartet wird, sodass nach Ablauf einer voreinstellbaren Zeitdauer 153 ein neuer Steuervorgang durchgeführt wird.

Aus dem Diagramm ist ersichtlich, dass zu einem Zeitpunkt 154 die Spannung am Schweißdraht 14, insbesondere die Lichtbogenspannung 151, über den ermittelten Referenzwert 152 steigt, d.h., dass zum Zeitpunkt 154 von der Steuervorrichtung 5 das Zeitglied aktiviert wird, sodass nach Ablauf der voreingestellten Zeitdauer 153, also zu einem Zeitpunkt 155, von der Steuervorrichtung 5 das Leistungsteil 4 derartig ausgesteuert wird, dass der Strom auf einen voreinstellbaren Minimalwert 156 abgesenkt wird, wie dies ab dem Zeitpunkt 155 ersichtlich ist. Gleichzeitig mit dem Absenken des Stromes auf den Minimalwert 156 beginnt auch die Spannung am Schweißgerät 1, aufgrund des kürzer werdenden Lichtbogens 16, zu sinken. Von der Steuervorrichtung 5 wird nunmehr der Spannungswert, insbesondere die Lichtbogenspannung 151, überwacht, sodass durch einen laufenden Vergleich zwischen dem Ist-Wert und einem voreingestellten Minimalwert 157 die Steuervorrichtung 5 erkennen kann, dass die Spannung, insbesondere die Lichtbogenspannung 151, den Minimalwert 157 erreicht hat. Selbstverständlich ist es möglich, dass das Einleiten des Absenkens des Stromes auf den Minimalwert 156 direkt nach dem Erreichen des Referenzwertes 152 möglich ist.

Nachdem die Spannung soweit abgesunken ist, dass sie mit dem Minimalwert 157 übereinstimmt bzw. unterhalb des Minimalwertes 157 liegt, ist der Zündprozess zum Zünden des Lichtbogens 16 mit einer Stabilisierungsphase abgeschlossen, d.h., dass nunmehr der tatsächliche Schweißprozess durchgeführt werden kann, wie dies ab einem Zeitpunkt 158 ersichtlich ist, d.h., dass beispielsweise bei einem Pulsschweißverfahren ab dem Zeitpunkt 158 von der Steuervorrichtung 5 der Pulsgenerator gestartet wird, wie dies durch Schweißimpulse 159, 160 in den Fig. 13 und 14 dargestellt ist. Auf die exakte Abwicklung der nachfolgenden Schweißprozesse wird nicht näher eingegangen, da nach dem Zündverfahren, welches zum Zeitpunkt 158 abgeschlossen ist, jedes beliebige zum Stand der Technik zählende Schweißverfahren durchgeführt werden kann.

Der Vorteil bei einem derartigen Zündprozess liegt darin, dass aufgrund der hohen Leerlaufspannung, die nur kurzzeitig über die zusätzliche Konstant-Spannungsquelle 132 an den Schweißdraht 14 angelegt wird, ein sehr rascher und steiler Stromanstieg am Schweißdraht 14 erreicht wird, sodass eine sichere Zündung des Lichtbogens 16 erreicht wird. Weiters wird durch den steilen Stromanstieg verhindert, dass zwischen dem Schweißdraht 14 und dem Werkstück 17 ein satter Kurzschluss entsteht, wodurch Schweißspritzer sowie eventuell entstehende Bindefehler vermieden werden können. Darüber hinaus liegt die hohe Leerlaufspannung nicht vor dem Berühren des Schweißdrahtes 14 mit dem Werkstück 17 an den Schweißbuchsen an.

Die Problematik bei einem zum Stand der Technik zählenden Verfahren liegt darin, dass es öfter zu sogenannten satten Kurzschlüssen kommen kann, bei denen der normale Stromimpuls bzw. Stromwert 149 nicht mehr ausreicht, um den Lichtbogen 16 zu zünden bzw. zu erzeugen. Dieser satte Kurzschluss kann nur mehr durch eine entsprechende Stromerhöhung bzw. andauernde Stromlieferung zum Schweißdraht 14 aufgelöst werden, wodurch der Schweißdraht 14 an einer undefinierten Stelle, die meist direkt am Kontaktrohr des Schweißbrenners 11 liegt, durchschmolzen wird. Infolge wird ein kurzes Stück des Schweißdrahtes 14 weggeschleudert, sodass der Lichtbogen 16 vom Kontaktrohr des Schweißbrenners 11 zum Werkstück 17 gezündet wird bzw. dass bei zu großem Abstand kein Lichtbogen 16 gezündet werden kann. Durch die Ausbildung eines satten Kurzschlusses entstehen große Mengen an Schweißspritzern bzw. an Einbränden, die durch die hohen Stromimpulse zur Auflösung des satten Kurzschlusses erzeugt werden.

Bei dem erfindungsgemäßen Zündverfahren werden die satten Kurzschlüsse bei der Berührung des Schweißdrahtes 14 mit dem Werkstück 17 dadurch verhindert, dass der Stromanstieg zum Zündzeitpunkt des Lichtbogens 16, also zwischen den Zeitpunkten 144 und 147, sehr steil gemacht wird, wobei der Maximalwert 146 des Stromes begrenzt ist. Dazu wird der Konstant-Stromquelle 3, insbesondere des Leistungsteils 4, eine weitere Energiequelle, insbesondere die Konstant-Spannungsquelle 132, mit sehr hoher Leerlaufspannung und begrenztem Kurzschlussstrom parallel geschaltet.

Die parallel geschaltete Konstant-Spannungsquelle 132 weist dabei einen sehr kleinen Innenwiderstand auf. Dabei ist es möglich, dass die Konstant-Spannungsquelle 132 nur zeitlich begrenzte Energie liefert. Diese Eigenschaften für die Konstant-Spannungsquelle 132 können z.B. durch einen Kondensator 136 mit einer bestimmten Kapazität, der auf eine bestimmte Spannung, insbesondere auf die Leerlaufspannung, aufgeladen wird, erreicht werden. Damit eine vorgegebene Stromanstiegsgeschwindigkeit erreicht wird, muss bei gegebener Schweißkreisinduktivität L die dazu notwendige Höhe der Leerlaufspannung UL nach der allgemein bekannten Formel UL = L * di/dt errechnet werden. Dabei ist es beispielsweise möglich, dass der Benutzer eine entsprechende Stromanstiegsgeschwindigkeit auswählt, worauf die Steuervorrichtung 5 die entsprechende Leerlaufspannung errechnet und die Konstant-Spannungsquelle 132 auf eine entsprechende Leerlaufspannung auflädt. Damit der Kurzschlussstrom von der Konstant-Spannungsquelle 132 begrenzt werden kann, ist es möglich, dass der Widerstand des Schweißkreises verändert wird. Dies kann insofern erfolgen, indem von der Steuervorrichtung 5 ein entsprechender Widerstand in die Versorgungsleitung 18 dazugeschaltet wird.

Selbstverständlich ist es möglich, dass zur Begrenzung des Kurzschlussstromes von der Konstant-Spannungsquelle 132, wenn diese z.B. durch einen Kondensator 136 gebildet wird, die Kapazität verändert werden kann. Dies kann z.B. automatisch über die Steuervorrichtung 5 erfolgen.

Weiters kann anstelle der in Fig. 12 gezeigten, bevorzugt konstanten Vorschubgeschwindigkeit der abzuschmelzenden Elektrode die Vorschubgeschwindigkeit in Abhängigkeit der Schweißparameter bzw. in Abhängigkeit der gewünschten Schweißnaht während des Schweiß- oder auch Zündprozesses verändert werden.

Das zuvor beschriebene Verfahren wird hauptsächlich aufgrund der sicherheitstechnischen Probleme der hohen Leerlaufspannung bei automatisierten Schweißungen, wie sie bei Schweißrobotern durchgeführt werden, eingesetzt, da bei den automatisierten Schweißungen entsprechende Vorkehrungen durchgeführt werden können.

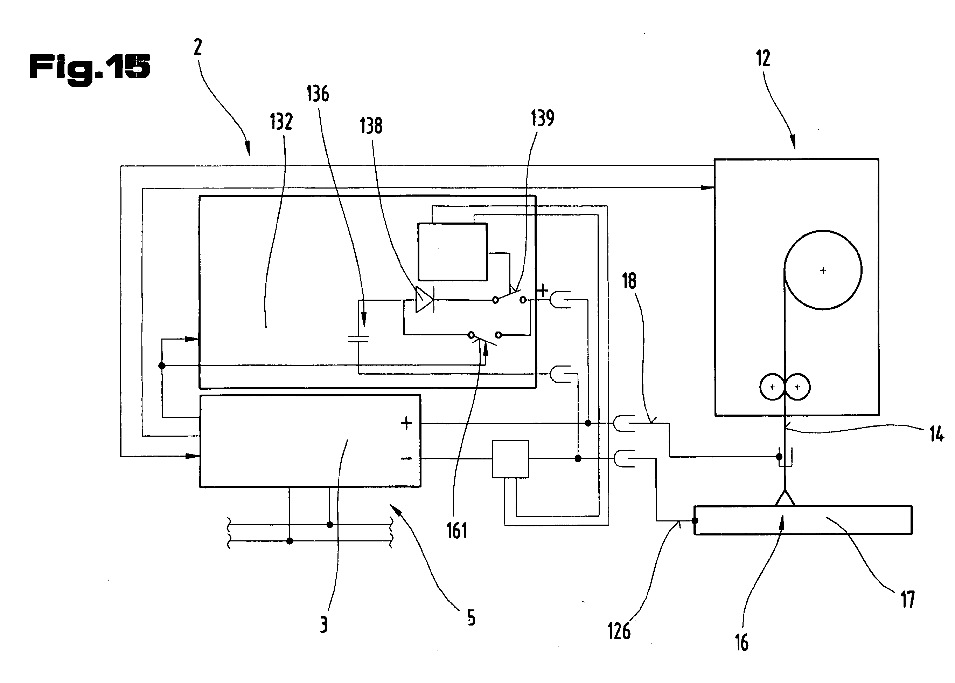

Fig. 15 zeigt ein anderes Ausführungsbeispiel der Schweißstromquelle 2 mit der Konstant-Stromquelle 3 und der Konstant-Spannungsquelle 132, wobei hierbei die Konstant-Spannungsquelle 132 vom Ausgang der Konstant-Stromquelle 3 gespeist wird.

Es wird also die Konstant-Stromquelle 3 gleichzeitig dazu verwendet, um die Konstant-Spannungsquelle 132, die beispielsweise wiederum durch den Kondensator 136 gebildet ist, aufzuladen. Eine Serienschaltung des Kondensators 136 mit der Diode 138 und dem elektronischen Schalter 139 ist dabei derart mit dem Ausgang der Konstant-Stromquelle 3 bzw. mit den Versorgungsleitungen 18, 126 verbunden, dass die Kathode der Diode 138 mit dem positiven Potential, demgemäss mit der Versorgungsleitung 18, verbunden ist und der verbleibende Anschluss des Kondensators 136 mit dem negativen Potential, beispielsgemäß mit der Versorgungsleitung 126, verbunden ist. Der Serienschaltung von der Diode 138 mit dem elektronischen Schalter 139 ist ein Schalter 161 parallel geschaltet, dessen Steuereingang über eine Steuerleitung 162 mit der Konstant-Stromquelle 3 oder auch mit der Steuervorrichtung 5 verbunden ist, wodurch die Serienschaltung der Diode 138 und des Schalters 139 überbrückt werden kann.

Mittels dem Ausgang der Konstant-Stromquelle 3 wird also die Konstant-Spannungsquelle 132, insbesondere der Kondensator 136, aufgeladen. Die Diode 138 dient der Entkopplung des Schweißstromkreises während der Schweißung. Die Konstant-Stromquelle 3 ist aufgrund ihrer Auslegung bzw. ihres Leistungsteilkonzeptes in der Lage, nach dem Startbefehl eine entsprechend hohe Leerlaufspannung zu liefern, sodass über den von der Konstant-Stromquelle 3 oder auch von der Steuervorrichtung 5 gesteuerten, in der Startphase leitenden Schalter 161 der Kondensator 136 auf eine entsprechend hohe Spannung von beispielsweise 200 V aufgeladen wird. Nachdem der bevorzugt voreinstellbare Spannungswert am Kondensator 136 erreicht ist, wird der Schalter 161 geöffnet bzw. in den Sperrzustand versetzt und die Leerlaufspannung der Konstant-Stromquelle 3 auf einen den Sicherheitsvorschriften entsprechenden Wert abgesenkt und nachfolgend das Drahtvorschubgerät 12 aktiviert. Tritt innerhalb einer bestimmten, voreinstellbaren, relativ kurzen Zeitspanne nach dem Start der Konstant-Stromquelle 3 keine Berührung des dem Werkstück 17 zugeordneten Endes des Schweißdraht 14 mit dem Werkstück 17 auf, so wird beispielsweise der Schalter 161 abermals geschlossen und die Spannung des Kondensators 136 auf einen den Sicherheitsvorschriften entsprechenden Wert abgesenkt.

Berührt innerhalb der Zeitspanne das Schweißdrahtende das Werkstück 17, so wird durch die Konstant-Spannungsquelle 132 bzw. den Kondensator 136 durch Aktivieren des Schalters 139 ebenso ein steiler Stromanstieg auf den Maximalwert 146, wie in Fig. 14 beschrieben, erzielt, worauf nach Erreichen dieses Maximalwertes 146 der von der Konstant-Spannungsquelle 132, insbesondere dem Kondensator 136, abgegebene Strom absinkt und der Lichtbogen 16 durch den ansteigenden Strom von der Konstant-Stromquelle 3 aufrecht erhalten wird.

Es kann also festgehalten werden, dass die Konstant-Spannungsquelle 132, wenn diese parallel mit der Konstant-Stromquelle 3 geschaltet ist und den Schalter 161 aufweist, keine eigene Ladeschaltung besitzen muss, und in der Startphase der Konstant-Stromquelle 3 vom Ausgang der Konstant-Stromquelle 3 selbst auf einen entsprechenden hohen Spannungswert aufgeladen wird. Hierzu ist es beispielsweise möglich, dass vor den Ausgangs- bzw. den Schweißbuchsen der Konstant-Stromquelle 3 zusätzlich Schalter angeordnet werden können, sodass während des Ladevorganges für den Kondensator 136 kein Stromkreis über die Schweißbuchsen gebildet werden kann. Gleichzeitig mit dem Aktivieren des Schalters 161 können die zusätzlich vor den Schweißbuchsen angeordneten Schalter geschlossen werden, sodass ein Zündvorgang durchgeführt werden kann.

Selbstverständlich sind die zuvor beschriebenen, erfindungsgemäßen Verfahren bei sämtlichen aus dem Stand der Technik bekannten abschmelzenden Elektroden, also zum Beispiel sowohl bei Drahtelektroden als auch bei Stabelektroden, welche bevorzugt mit einer Umhüllung versehen sind und auch ohne Schutzgasatmosphäre verarbeitet werden, anwendbar.

Abschließend sei der Ordnung halber darauf hingewiesen, dass in den Zeichnungen einzelne Bauteile und Baugruppen zum besseren Verständnis der Erfindung unproportional und maßstäblich verzerrt dargestellt sind.

Es können auch einzelne Merkmale der einzelnen Ausführungsbeispiele mit anderen Einzelmerkmalen von anderen Ausführungsbeispielen oder jeweils für sich alleine den Gegenstand von eigenständigen Erfindungen bilden. Vor allem können die einzelnen in den Fig. 1; 2 bis 5; 6 bis 9; 10; 11, 12, 13, 14; 15 gezeigten Ausführungen den Gegenstand von eigenständigen erfindungsgemäßen Lösungen bilden. Die diesbezüglichen erfindungsgemäßen Aufgaben und Lösungen sind den detaillierten Beschreibungen dieser Figuren zu entnehmen.

### Bezugszeichenaufstellung

- 1: Schweißgerät
- 2: Schweißstromquelle
- 3: Konstant-Stromquelle
- 4: Leistungsteil
- 5: Steuervorrichtung

- 6: Umschaltglied
- 7: Steuerventil
- 8: Versorgungsleitung
- 9: Gas
- 10: Gasspeicher

- 11: Schweißbrenner
- 12: Drahtvorschubgerät
- 13: Versorgungsleitung
- 14: Schweißdraht
- 15: Vorratstrommel

- 16: Lichtbogen
- 17: Werkstück
- 18: Versorgungsleitung
- 19: Kühlkreislauf
- 20: Strömungswächter

- 21: Wasserbehälter
- 22: Ein- und/oder Ausgabevorrichtung
- 23: Versorgungsleitung
- 24: Versorgungsleitung
- 25: Spannungsversorgungsnetz

- 26: Versorgungsleitung
- 27: Steuerleitung
- 28: Steuerleitung
- 29: Fördervorrichtung
- 30: Förderrolle

- 31: Förderrolle
- 32: Konstant-Spannungsquelle
- 33: Leitung
- 34: Leitung
- 35: Steuerleitung

- 36: Zeitpunkt
- 37: Zeitpunkt
- 38: Zeitpunkt
- 39: Wert
- 40: Maximalwert

- 41: Zeitpunkt
- 42: Zeitpunkt
- 43: Stromwert
- 44: Zeitpunkt
- 45: Lichtbogenspannung

- 46: Referenzwert
- 47: Zeitdauer
- 48: Zeitpunkt
- 49: Zeitpunkt
- 50: Minimalwert

- 51: Minimalwert
- 52: Zeitpunkt
- 53: Schweißimpuls
- 54: Schweißimpuls
- 55: Zeitpunkt

- 56: Zeitpunkt
- 57: Zeitpunkt
- 58: Wert
- 59: Zeitdauer
- 60: Zeitpunkt

- 61: Wert
- 62: Zeitpunkt
- 63: Lichtbogenspannung
- 64: Zeitdauer
- 65: Wert

- 66: Zeitpunkt
- 67: Sollwert
- 68: Zeitpunkt
- 69: Wert
- 70: Minimalwert

- 71: Zeitpunkt
- 72: Schweißimpuls
- 73: Zeitdauer
- 74: Kondensator
- 75: Diode

- 76: Schalter

- 123: Versorgungsleitung
- 124: Versorgungsleitung
- 125: Versorgungsleitung

- 126: Versorgungsleitung
- 127: Steuerleitung
- 128: Steuerleitung
- 129: Fördervorrichtung
- 130: Förderrolle

- 131: Förderrolle
- 132: Konstant-Spannungsquelle
- 133: Leitung
- 134: Leitung
- 135: Steuerleitung

- 136: Kondensator
- 137: Aufladevorrichtung
- 138: Diode
- 139: Schalter
- 140: Steuereinrichtung

- 141: Stromwandler
- 142: Zeitpunkt
- 143: Zeitpunkt
- 144: Zeitpunkt
- 145: Wert

- 146: Maximalwert
- 147: Zeitpunkt
- 148: Zeitpunkt
- 149: Stromwert
- 150: Zeitpunkt

- 151: Lichtbogenspannung
- 152: Referenzwert
- 153: Zeitdauer
- 154: Zeitpunkt
- 155: Zeitpunkt

- 156: Minimalwert
- 157: Minimalwert
- 158: Zeitpunkt
- 159: Schweißimpuls
- 160: Schweißimpuls

- 161: Schalter
- 162: Steuerleitung

## Patentansprüche

1. Verfahren zum Zünden eines Lichtbogens (16) zwischen einem Werkstück (17) und einer abschmelzenden Elektrode (14) nach dem Lift-Arc Prinzip, bei dem die abschmelzende Elektrode (14) mit Energie aus einer geregelten Konstant-Stromquelle (3) versorgt wird, worauf unmittelbar nach Berührung der abschmelzenden Elektrode (14) mit dem Werkstück (17) der von der Konstant-Stromquelle (3) gelieferte Strom erhöht wird,
**dadurch gekennzeichnet, dass**
unmittelbar nach dem Berühren der abschmelzenden Elektrode (14) der Strom von der Konstant-Stromquelle (3) auf einen ersten voreinstellbaren Wert (58) angehoben wird und danach der Strom solange konstant gehalten wird bis eine voreinstellbare Zeitdauer (59) ab dem Berühren der Elektrode (14) mit dem Werkstück (17) abgelaufen ist, worauf sofort der Strom in der Kurzschlussphase auf einen weiteren voreinstellbaren Festwert (61) angehoben wird.

2. Verfahren nach Anspruch 1, **dadurch gekennzeichnet, dass** gleichzeitig mit dem Anheben des Stromes auf den weiteren voreinstellbaren Wert (61) oder nach Ablauf einer weiteren voreinstellbaren Zeitdauer die Elektrode (14) vom Werkstück (17) abgehoben und dabei die Spannung an der Elektrode (14) überwacht wird.

3. Verfahren nach Anspruch 1 oder 2, **dadurch gekennzeichnet, dass** bei einem Spannungsanstieg an der Elektrode (14), insbesondere auf einen voreinstellbaren Wert, die Abhebebewegung bzw. Rückwärtsbewegung der Elektrode (14) gestoppt und gleichzeitig der Strom über eine weitere voreinstellbare Zeitdauer (64) konstant gehalten wird, wonach der Strom auf einen weiteren höheren Sollwert (65) angehoben und solange auf diesem Sollwert (65) gehalten wird, bis die Spannung an der Elektrode (14) einen voreinstellbaren Sollwert (67) überschreitet.

4. Verfahren nach einem oder mehreren der Ansprüche 1 bis 3, **dadurch gekennzeichnet, dass** nach Erreichen oder Überschreiten des voreinstellbaren Sollwertes (65) die Elektrode (14) mit einer voreinstellbaren Drahtvorschubgeschwindigkeit in Richtung auf das Werkstück (17) zubewegt und gleichzeitig mit der Zustellbewegung der Elektrode (14) der Strom auf einen weiteren Sollwert abgesenkt wird und dabei solange konstant gehalten wird, bis die Spannung an der Elektrode (14) auf einen voreinstellbaren Minimalwert abgesunken ist, worauf der Schweißprozess gestartet wird.

5. Verfahren nach einem oder mehreren der Ansprüche 1 bis 4, **dadurch gekennzeichnet, dass** als Elektrode (14) eine Stabelektrode eingesetzt wird.

6. Verfahren nach einem oder mehreren der Ansprüche 1 bis 5, **dadurch gekennzeichnet, dass** als Elektrode (14) eine Drahtelektrode eingesetzt wird.

## Claims

1. Method for igniting an electric arc (16) between a workpiece (17) and a consumable electrode (14) according to the Lift Arc Principle, by which the consumable electrode (14) is supplied with energy from a controlled constant current source (3), whereupon the current delivered by the constant current source (3) is increased directly after the consumable electrode (14) has contacted the workpiece (17), **characterized in that** the current from the constant current source (3) is increased to a first adjustable value (58) after contacting the consumable electrode (14) and then the current is held constant until a pre-adjustable time period (59) from the contact of the electrode (14) with the workpiece (17) has expired, whereupon the current is directly increased to a further pre-adjustable fixed value (61) in the short-circuit phase.

2. Method according to claim 1, **characterized in that** at the same time when the current is being increased to a further pre-adjustable value (61) or after a further pre-adjustable time period has expired, the electrode (14) is lifted from the workpiece (17) and at the same time, the voltage at the electrode (14) is supervised.

3. Method according to claim 1 or 2, **characterized in that** when the voltage at the electrode (14) increases, in particular to a pre-adjustable value, the lifting movement or the backward movement of the electrode (14) is stopped and at the same time, the current is kept constant for a further pre-adjustable period (64), whereupon the current is increased to another higher desired value (65) and kept at this desired value (65) until the voltage at the electrode (14) exceeds a pre-adjustable desired value (65).

4. Method according to one or more of claims 1 to 3, **characterized in that** after the pre-adjustable desired value (65) is achieved or exceeded, the electrode (14) is moved in direction towards the workpiece (17) at a pre-adjustable wire feed speed and simultaneously with the feed movement of the electrode (14), the current is decreased to a further desired value and is at the same time kept constant until the voltage at the electrode (14) has sunk to a pre-adjustable minimum value, whereupon the welding process is started.

5. Method according to one or more of claims 1 to 4, **characterized in that** a bar electrode is used as electrode (14).

6. Method according to one or more of claims 1 to 5, **characterized in that** a wire electrode is used as electrode (14).

## Revendications

1. Procédé permettant l'amorçage d'un arc électrique (16) entre une pièce à souder (17) et une électrode fusible (14) selon le principe du contact (lift-arc), dans lequel l'électrode fusible (14) est alimentée en énergie à partir d'une source de courant constant (3) réglée, à la suite de quoi, immédiatement après le contact de l'électrode fusible (14) avec la pièce (17), le courant fourni par la source de courant constant (3) est augmenté,
**caractérisé en ce qu'**après le contact de l'électrode fusible (14), le courant de la source de courant constant (3) est élevé à une première valeur (58) préréglable et ensuite le courant est maintenu constant jusqu'à l'expiration d'un espace de temps (59) préréglable débutant lorsque l'électrode fusible (14) entre en contact avec la pièce à souder (17), à la suite de quoi le courant dans la phase de court-circuit est élevé immédiatement à une autre valeur fixe (61) préréglable.

2. Procédé selon la revendication 1, **caractérisé en ce que** simultanément avec l'augmentation du courant à l'autre valeur (61) préréglable ou après l'expiration d'un autre espace de temps préréglable, l'électrode (14) est retirée de la pièce (17) et la tension au niveau de l'électrode (14) est surveillée.

3. Procédé selon la revendication 1 ou 2, **caractérisé en ce que**, lors de l'augmentation de la tension sur l'électrode (14), en particulier à une valeur préréglable, le mouvement de retrait ou mouvement de retour de l'électrode (14) est stoppé et, en même temps, le courant est maintenu constant pendant un autre espace de temps (64) préréglable, à la suite de quoi le courant est élevé à une autre valeur de consigne (65) préréglable plus élevée et est maintenu à cette valeur de consigne (65) jusqu'à ce que la tension sur l'électrode (14) soit supérieure à une valeur de consigne (67) préréglable.

4. Procédé selon une ou plusieurs des revendications 1 à 3, **caractérisé en ce que**, lorsque la valeur de consigne (65) préréglable est atteinte ou dépassée, l'électrode (14) est déplacée vers la pièce à souder (17) avec une vitesse d'avance du fil préréglable et, simultanément avec le mouvement d'approche de l'électrode (14), le courant est abaissé à une autre valeur de consigne et est maintenu ensuite constant jusqu'à ce que la tension sur l'électrode (14) soit abaissée à une valeur minimale préréglable, à la suite de quoi le processus de soudage commence.

5. Procédé selon une ou plusieurs des revendications 1 à 4, **caractérisé en ce que** l'électrode (14) est une électrode en baguette.

6. Procédé selon une ou plusieurs des revendications 1 à 5, **caractérisé en ce que** l'électrode (14) est une électrode en fil.
